# EUROPEAN PATENT APPLICATION

(11) **EP 4 753 209 A1**
(43) Date of publication of application: **03.06.2026**
(21) Application number: 24857596.1
(22) Date of filing: 15.01.2024
(51) Int. Cl.: H04L 9/40

(54) **PACKET INSPECTION METHOD, ELECTRONIC DEVICE, SYSTEM, AND COMPUTER-READABLE STORAGE MEDIUM**

(30) Priority: 29.08.2023 CN 202311098912; 27.11.2023 CN 202311604185
(71) Applicant: HUAWEI TECHNOLOGIES CO., LTD., Shenzhen 518129 (CN)
(72) Inventor: WU, Zhewen, Shenzhen, Guangdong 518129 (CN); XU, Juhua, Shenzhen, Guangdong 518129 (CN)
(74) Representative: Epping - Hermann - Fischer
(86) International application number: PCT/CN2024/072394
(87) International publication number: WO 2025/044039

(57) **Abstract**

This application provides a packet detection method, an electronic device, a system, and a computer-readable storage medium, and relates to the field of communication security technologies. In this application, detection marking information that indicates a risk in a service packet is set in the service packet. In a process of forwarding the service packet on a forwarding path, a security device forwards the service packet that carries the detection marking information, or before forwarding the service packet, the security device updates a value of a field in the service packet based on a detection result after performing security detection on the service packet. The network device sends flow security status information to a network management analysis device based on the detection marking information carried in the service packet, to assist a control plane in identifying a service flow forwarding path on which a risk exists.

## Description

This application claims priorities to Chinese Patent Application No. 202311098912.2, filed with the China National Intellectual Property Administration on August 29, 2023 and entitled "SERVICE FLOW SECURITY DETECTION METHOD AND RELATED DEVICE", and to Chinese Patent Application No. 202311604185.2, filed with the China National Intellectual Property Administration on November 27, 2023 and entitled "PACKET DETECTION METHOD, ELECTRONIC DEVICE, SYSTEM, AND COMPUTER-READABLE STORAGE MEDIUM", both of which are incorporated herein by reference in their entireties.

### TECHNICAL FIELD

This application relates to the field of communication security technologies, and in particular, to a packet detection method, an electronic device, a system, and a computer-readable storage medium.

### BACKGROUND

A firewall (firewall) technology is a technology that helps a computer network to build a protective shield that isolates an internal network and an external network, to protect security of user data and information.

Currently, when finding that a computer network is attacked in a running process, a firewall blocks some packets, for example, discards a data packet (also referred to as a "packet loss"), to ensure running security of the computer network. However, network operations and maintenance personnel can neither learn of a cause of a traffic packet loss, nor learn of a packet forwarding path on which a threat exists in the network. Consequently, this affects service security.

### SUMMARY

Embodiments of this application provide a packet detection method, an electronic device, a system, and a computer-readable storage medium. Detection marking information is set in a packet to indicate a risk, to help resolve a problem that a network management analyzer cannot identify a risk packet forwarding path in a service flow.

To achieve the foregoing objective, this application uses the following technical solutions. According to a first aspect, a packet detection method is provided. The method includes: A security device receives a first service packet from a previous-hop device on a service flow forwarding path, where a packet header of the first service packet includes detection marking information, the detection marking information includes a first field, and a value of the first field indicates whether a risk exists in the first service packet. The security device sends a second service packet to a next-hop device on the service flow forwarding path, where the second service packet is the same as the first service packet, or the second service packet is obtained by updating the value of the first field in the first service packet.

In the solution provided in the first aspect, detection marking information is set in a service packet, and a risk is indicated in the service packet based on the detection marking information. In this way, a network management analyzer can identify, based on the detection marking information in the service packet, a service flow forwarding path on which risk exists, to ensure service security. In a possible implementation, if the value of the first field in the first service packet is a second value, and the second value indicates that a risk exists in the first service packet, that the security device sends the second service packet to the next-hop device on the service flow forwarding path includes: The security device sends the second service packet to the next-hop device on the service flow forwarding path, where the first service packet is the same as the second service packet. In this way, when the value of the first field in the first service packet indicates that a risk exists in the first service packet, the second service packet sent to the next-hop device is the same as the first service packet, so that a service packet indicated as risk can retain a risk mark during forwarding, to assist the network management analyzer in identifying a risk path, and ensure service security.

For example, when the value of the first field in the first service packet is the second value, if a security detection result of the first service packet by the security device indicates that no risk exists in the first service packet, the value of the first field in the detection marking information is not updated. In this way, the obtained second service packet is the same as the first service packet. For example, when the value of the first field in the first service packet is the second value, if the security detection result of the first service packet by the security device indicates that a risk exists in the first service packet, the value of the first field in the detection marking information is not updated. In this way, the obtained second service packet is the same as the first service packet.

In a possible implementation, if the value of the first field in the first service packet is a first value, and the first value indicates that no risk exists in the first service packet, before the security device sends the second service packet to the next-hop device on the service flow forwarding path, the method further includes: The security device performs security detection on the first service packet. That the security device sends the second service packet to the next-hop device on the service flow forwarding path includes: In response to a security detection result of the first service packet by the security device indicating that no risk exists in the first service packet, the security device sends the second service packet to the next-hop device on the service flow forwarding path, where the first service packet is the same as the second service packet; and in response to the security detection result of the first service packet by the security device indicating that a risk exists in the first service packet, the security device sends the second service packet to the next-hop device on the service flow forwarding path, where the second service packet is obtained by updating the value of the first field in the first service packet to a second value, and the second value indicates that a risk exists in the second service packet. In this way, a risk service packet in a service flow is identified by security detection, and the risk service packet is indicated based on the detection marking information, to assist the network management analyzer in identifying a risk path, to ensure service security.

That the security device performs security detection on the first service packet includes: detecting whether flow identification information of the first service packet is the same as flow identification information of a third service packet in which the security device detects a risk and whether the first service packet includes a malicious feature.

For example, if the flow identification information of the first service packet is the same as the flow identification information of the third service packet in which the security device detects a risk, and/or the first service packet includes a malicious feature, the security detection result of the first service packet by the security device indicates that a risk exists in the first service. If the flow identification information of the first service packet is different from the flow identification information of the third service packet in which the security device detects a risk, and the first service packet does not include a malicious feature, the security detection result of the first service packet by the security device indicates that no risk exists in the first service.

For example, that in response to the security detection result of the first service packet by the security device indicating that a risk exists in the first service packet, the security device sends the second service packet to the next-hop device on the service flow forwarding path includes: if the flow identification information of the first service packet is the same as the flow identification information of the third service packet in which the security device detects a risk, but the first service packet does not include a malicious feature, sending the second service packet to the next-hop device on the service flow forwarding path.

In a possible implementation, the detection marking information in the first service packet further includes a second field, a value of the second field indicates whether security detection has been performed on the first service packet, and that the security device performs security detection on the first service packet includes: In response to the value of the second field in the detection marking information in the first service packet being a third value, and the third value indicating that security detection has not been performed on the first service packet, the security device performs security detection on the first service packet. Before the security device sends the second service packet to the next-hop device on the service flow forwarding path, the method further includes: updating the value of the second field in the first service packet to a fourth value, to obtain the second service packet, where the fourth value indicates that security detection has been performed on the first service packet. In this way, the security device can perform targeted processing on a service packet, for example, perform security detection particularly on a packet on which security detection has not been performed, to reduce a quantity of service packets on which the security device needs to perform security detection, and help the security device improve processing efficiency.

In a possible implementation, before the security device performs security detection on the first service packet, the method further includes: in response to the value of the second field in the detection marking information in the first service packet being the fourth value, the security device skips performing the step of performing security detection on the first service packet. In this way, the security device can perform targeted processing on the service packet, for example, skip performing security detection on a packet on which security detection has been performed, to reduce a quantity of service packets on which the security device needs to perform security detection, and improve processing efficiency.

In a possible implementation, that the security device performs security detection on the first service packet includes: The security device determines whether the flow identification information of the first service packet is the same as the flow identification information of the third service packet in which the security device detects a risk; in response to the flow identification information of the first service packet being the same as the flow identification information of the third service packet in which the security device detects a risk, the security device determines that the security detection result of the first service packet indicates that a risk exists in the first service packet; in response to the flow identification information of the first service packet being different from the flow identification information of the third service packet in which the security device detects a risk, the security device determines whether the first service packet includes a malicious feature in a malicious feature library; in response to the flow identification information of the first service packet being different from the flow identification information of the third service packet in which the security device detects a risk, and the first service packet including no malicious feature in the malicious feature library, the security device determines that the security detection result of the first service packet indicates that no risk exists in the first service packet; and in response to the flow identification information of the first service packet being different from the flow identification information of the third service packet in which the security device detects a risk, and the first service packet including a malicious feature in the malicious feature library, the security device determines that the security detection result of the first service packet indicates that a risk exists in the first service packet. In this way, matching is performed between the flow identification information of the first service packet and the flow identification information of the third service packet in which a risk exists, and content security detection is performed on the first service packet, to implement security detection on the first service packet in a plurality of dimensions, so that network security can be improved. In addition, a service packet in which a potential threat exists can be identified by multi-dimension security detection, to assist the network management analyzer in identifying an attacked service flow forwarding path based on the service packet in which a potential threat exists.

For example, the flow identification information includes one or more of the following: address information of a source end, address information of a destination end, a port number of the source end, a port number of the destination end, and a protocol type.

In a possible implementation, the detection marking information further includes a third field, and a value of the third field indicates a risk type of a risk when the risk exists in the first service packet. In this way, more abundant information about a risk can be provided for the network management analyzer by using the third field, so that the network management analyzer performs further processing such as analysis and association, to better ensure service security.

For example, the risk type includes one or more of the following: a file-type risk, a protocol-type risk, and a world wide web (world wide web, WEB)-type risk.

In a possible implementation, in the detection marking information, the first field occupies 1 bit, the second field occupies 1 bit, and the third field occupies 3 bits. In this way, the service packet carries the detection marking information, so that a risk service flow forwarding path is identified. In a possible implementation, the first service packet includes an in-situ flow information telemetry (in-situ flow information telemetry, IFIT) packet header, and the detection marking information is located in the IFIT packet header. In this way, the detection marking information is carried in the in-situ flow information telemetry packet header, so that the network management analyzer can identify a delay and a packet loss in a service flow when identifying a risk service flow forwarding path.

In a possible implementation, the first service packet is a segment routing over IPv6 (segment routing over IPv6, SRv6) protocol packet, and the IFIT packet header is located in a segment routing header SRH (segment routing header) of the first service packet; or the first service packet is a multiprotocol label switching (multiprotocol label switching, MPLS) protocol packet, and the IFIT packet header is located in the MPLS packet header of the first service packet. In this way, different types of service packets can carry the detection marking information, to assist the network management analyzer in identifying a risk service flow forwarding path.

According to a second aspect, a packet detection method is provided. The method includes: A first network device encapsulates to-be-transmitted service flow data, to obtain a first service packet, where a packet header of the first service packet includes detection marking information, the detection marking information includes a first field, a value of the first field is set to a first value, and the first value indicates that no risk exists in the first service packet; and the first network device sends the first service packet to a next-hop device on a service flow forwarding path.

The first network device is a source node on the service flow forwarding path.

In the solution provided in the second aspect, the source node encapsulates the detection marking information into the service packet, and indicates a risk in the service packet based on the detection marking information, so that a network management analyzer can identify, based on the detection marking information in the service packet, a service flow forwarding path in which a risk exists, to ensure service security.

In a possible implementation, the detection marking information further includes a second field, a value of the second field is set to a third value, and the third value indicates that security detection has not been performed on the first service packet. In this way, the second field indicates whether security detection has been performed on the first service packet, so that the security device can perform targeted processing on a service packet, to improve processing efficiency.

In a possible implementation, the detection marking information further includes a third field, a value of the third field is set to a fifth value, and the fifth value indicates that a risk type of the first service packet is to be set. In this way, the third field is set, so that the network management analyzer can identify a risk type, to ensure service security.

For example, the risk type includes one or more of the following: a file-type risk, a protocol-type risk, and a world wide web WEB-type risk.

In a possible implementation, in the detection marking information, the first field occupies 1 bit, the second field occupies 1 bit, and the third field occupies 3 bits. In this way, the service packet carries the detection marking information, so that a risk service flow forwarding path is identified. In a possible implementation, the first service packet includes an in-situ flow information telemetry IFIT packet header, and the detection marking information is located in the IFIT packet header. In this way, the detection marking information is carried in the in-situ flow information telemetry packet header, so that the network management analyzer can identify a delay and a packet loss in a service flow when identifying a risk service flow forwarding path.

In a possible implementation, the first service packet is an SRv6 protocol packet, and the IFIT packet header is located in a segment routing header SRH of the first service packet; or the first service packet is an MPLS protocol packet, and the IFIT packet header is located in the MPLS packet header of the first service packet. In this way, different types of service packets can carry the detection marking information, to assist the network management analyzer in identifying a risk service flow forwarding path.

In a possible implementation, the method further includes: The first network device sends flow security status information to the network management analyzer, where the flow security status information indicates whether a risk exists in the first service packet. In this way, the flow security status information is sent to the network management analyzer, so that the network management analyzer can detect, based on the flow security status information, a service flow packet forwarding path on which a risk exists.

In a possible implementation, the flow security status information includes flow identification information and the detection marking information of the first service packet. In this way, the flow security status information is sent to the network management analyzer, so that the network management analyzer can detect, based on the flow identification information and the detection marking information of the first service packet, whether a risk exists on a forwarding path of the first service packet.

According to a third aspect, a packet detection method is provided. The method includes: A second network device receives a second service packet from a previous-hop device on a service flow forwarding path, where a packet header of the second service packet includes detection marking information, the detection marking information includes a first field, and a value of the first field indicates whether a risk exists in the second service packet; and the second network device sends flow security status information to a network management analyzer, where the flow security status information indicates whether a risk exists in the second service packet.

Optionally, the second network device is an intermediate node on the service flow forwarding path. Optionally, the second network device is a tail node on the service flow forwarding path.

In the solution provided in the third aspect, the detection marking information is set in a service packet, a risk is indicated in the service packet based on the detection marking information, and the flow security status information is sent to the network management analyzer, so that the network management analyzer can identify, based on the detection marking information, a service flow forwarding path on which a risk exists, to ensure service security.

In a possible implementation, the detection marking information further includes a second field, and a value of the second field indicates whether security detection has been performed on the second service packet. In this way, the second field indicates whether security detection has been performed on the first service packet, so that the security device can perform targeted processing on a service packet, to improve processing efficiency.

In a possible implementation, the detection marking information further includes a third field, and a value of the third field indicates a risk type of a risk when the risk exists in the second service packet. In this way, the third field is set, so that a risk type can be identified at a management and analysis layer, to ensure service security.

For example, the risk type includes one or more of the following: a file-type risk, a protocol-type risk, and a world wide web WEB-type risk.

In a possible implementation, in the detection marking information, the first field occupies 1 bit, the second field occupies 1 bit, and the third field occupies 3 bits. In this way, the service packet carries the detection marking information, so that a risk service flow forwarding path is identified. In a possible implementation, the second service packet includes an in-situ flow information telemetry IFIT packet header, and the detection marking information is located in the IFIT packet header. In this way, the detection marking information is carried in the in-situ flow information telemetry packet header, so that the network management analyzer can identify a delay and a packet loss in a service flow when identifying a risk service flow forwarding path.

In a possible implementation, the second service packet is an SRv6 protocol packet, and the IFIT packet header is located in a segment routing header SRH of the second service packet; or the second service packet is an MPLS protocol packet, and the IFIT packet header is located in the MPLS packet header of the second service packet. In this way, different types of service packets can carry the detection marking information, to assist the network management analyzer in identifying a risk service flow forwarding path.

In a possible implementation, the flow security status information includes flow identification information and the detection marking information of the second service packet. In this way, the flow security status information is sent to the network management analyzer, so that the network management analyzer can detect, based on the flow identification information and the detection marking information of the second service packet, whether a risk exists on a forwarding path of the second service packet.

In a possible implementation, the method further includes: in response to the second network device being an intermediate node on the service flow forwarding path, the second network device sends the second service packet to a next-hop device on the service flow forwarding path. In this way, the second service packet can be forwarded to a destination network node.

According to a fourth aspect, a packet detection method is provided. The method includes: A network management analyzer receives flow security status information from a network device, where the flow security status information includes flow identification information and detection marking information of a service packet, the detection marking information includes a first field, and a value of the first field indicates whether a risk exists in the service packet; and when the value of the first field indicates that a risk exists in the service packet, outputs alarm information, where the alarm information includes an identifier of a service flow forwarding path on which a risk exists or identifiers of some nodes on the service flow forwarding path on which a risk exists, and the identifier of the service flow forwarding path on which a risk exists is determined based on the flow identification information.

In the solution provided in the fourth aspect, the detection marking information is set in the service packet, and a risk is indicated in the service packet based on the detection marking information. In this way, after receiving the flow security status information, the network management analyzer can identify, based on the detection marking information in the flow security status information, a service flow forwarding path on which a risk exists, to ensure service security.

According to a fifth aspect, a security device is provided. The security device includes a receiving unit, a security detection unit, and a sending unit. The receiving unit is configured to receive a first service packet from a previous-hop device on a service flow forwarding path, where a packet header of the first service packet includes detection marking information, the detection marking information includes a first field, and the first field indicates whether a risk exists in the first service packet. The sending unit is configured to send a second service packet to a next-hop device on the service flow forwarding path, where the second service packet is the same as the first service packet, or the second service packet is obtained by updating a value of the first field in the first service packet. The security detection unit is configured to perform security detection on the first service packet.

For beneficial effects of the security device provided in the fifth aspect, refer to the descriptions of any implementation in the first aspect. Details are not described herein again. The security device has a function of implementing the behavior in the method instance in any implementation of the first aspect. The function may be implemented by hardware, or may be implemented by hardware executing corresponding software. The hardware or the software includes one or more modules corresponding to the foregoing function.

According to a sixth aspect, a network device is provided. The network device includes a processing unit and a sending unit. The processing unit is configured to encapsulate to-be-transmitted service flow data, to obtain a first service packet, where a packet header of the first service packet includes detection marking information, the detection marking information includes a first field, a value of the first field is set to a first value, and the first value indicates that no risk exists in the first service packet. The sending unit is configured to send the first service packet to a next-hop device on a service flow forwarding path.

For beneficial effects of the network device provided in the sixth aspect, refer to the descriptions of any implementation in the second aspect. Details are not described herein again. The network device has a function of implementing the behavior in the method instance in any implementation of the second aspect. The function may be implemented by hardware, or may be implemented by hardware executing corresponding software. The hardware or the software includes one or more modules corresponding to the foregoing function.

According to a seventh aspect, a network device is provided. The network device includes a receiving unit and a sending unit. The receiving unit is configured to receive a second service packet from a previous-hop device on a service flow forwarding path, where a packet header of the second service packet includes detection marking information, the detection marking information includes a first field, and a value of the first field indicates whether a risk exists in the second service packet. The sending unit is configured to send flow security status information to a network management analyzer, where the flow security status information indicates whether a risk exists in the second service packet. The sending unit is configured to: when the network device is an intermediate node on the service flow forwarding path, send the second service packet to a next-hop device on the service flow forwarding path.

For beneficial effects of the network device provided in the seventh aspect, refer to the descriptions of any implementation in the third aspect. Details are not described herein again. The first network device has a function of implementing the behavior in the method instance in any implementation of the third aspect. The function may be implemented by hardware, or may be implemented by hardware executing corresponding software. The hardware or the software includes one or more modules corresponding to the foregoing function.

According to an eighth aspect, a network management analyzer is provided. The network management analyzer includes a receiving unit and an alarm unit. The receiving unit is configured to receive flow security status information from a network device, where the flow security status information includes flow identification information and detection marking information of a service packet, the detection marking information includes a first field, and a value of the first field indicates whether a risk exists in the service packet. The alarm unit is configured to: when the value of the first field indicates that a risk exists in the service packet, output alarm information, where the alarm information includes an identifier of a service flow forwarding path on which a risk exists or identifiers of some nodes on the service flow forwarding path on which a risk exists, and the identifier of the service flow forwarding path on which a risk exists is determined based on the flow identification information.

For beneficial effects of the network management analyzer provided in the eighth aspect, refer to the descriptions of any implementation in the fourth aspect. Details are not described herein again. The first network device has a function of implementing the behavior in the method instance in any implementation of the fourth aspect. The function may be implemented by hardware, or may be implemented by hardware executing corresponding software. The hardware or the software includes one or more modules corresponding to the foregoing function.

According to a ninth aspect, an electronic device is provided, including: a memory, configured to store computer program instructions; and a processor, configured to execute the computer program instructions, to support the electronic device in implementing the method according to any one of the possible implementations of the first aspect, implementing the method according to any one of the possible implementations of the second aspect, implementing the method according to any one of the possible implementations of the third aspect, or implementing the method according to any one of the possible implementations of the fourth aspect.

According to a tenth aspect, a service flow transmission system is provided, including one or more security devices, one or more network devices, and a network management analyzer. The security device is configured to perform the method according to any one of the possible implementations of the first aspect, the network device is configured to perform the method according to any one of the possible implementations of the second aspect or the method according to any one of the possible implementations of the third aspect, and the network management analyzer is configured to perform the method according to any one of the possible implementations of the fourth aspect. According to an eleventh aspect, a computer-readable storage medium is provided. The computer-readable storage medium stores computer program instructions. When the computer program instructions are executed by a processing circuit, the method according to any one of the possible implementations of the first aspect, the method according to any one of the possible implementations of the second aspect, the method according to any one of the possible implementations of the third aspect, or the method according to any one of the possible implementations of the fourth aspect is implemented.

According to a twelfth aspect, a chip system is provided. The chip system includes a processing circuit and a storage medium. The storage medium stores computer program instructions. When the computer program instructions are executed by the processing circuit, the method according to any one of the possible implementations of the first aspect, the method according to any one of the possible implementations of the second aspect, the method according to any one of the possible implementations of the third aspect, or the method according to any one of the possible implementations of the fourth aspect is implemented.

According to a thirteenth aspect, a computer program product including instructions is provided. When the computer program product is run on a computer, the computer is enabled to perform the method according to any possible implementation of the first aspect, the method according to any possible implementation of the second aspect, the method according to any possible implementation of the third aspect, or the method according to any possible implementation of the fourth aspect.

### BRIEF DESCRIPTION OF DRAWINGS

FIG. 1 is a diagram of an application scenario of a packet detection method according to an embodiment of this application;
FIG. 2 is a diagram of a service function chain according to an embodiment of this application;
FIG. 3 is a diagram of a principle of out-of-band detection according to an embodiment of this application;
FIG. 4 is a diagram of a principle of in-band detection according to an embodiment of this application;
FIG. 5 is a diagram of an IFIT encapsulation format in an IPv6 network environment according to an embodiment of this application;
FIG. 6 is a diagram of an encapsulation format of an SRv6 packet in an SRv6 network environment according to an embodiment of this application;
FIG. 7 is a diagram 1 of an IFIT encapsulation format in an MPLS network environment according to an embodiment of this application;
FIG. 8 is a diagram 2 of an IFIT encapsulation format in an MPLS network environment according to an embodiment of this application;
FIG. 9 is a diagram 3 of an IFIT encapsulation format in an MPLS network environment according to an embodiment of this application;
FIG. 10 is a diagram of a principle of in-situ flow information telemetry according to an embodiment of this application;
FIG. 11 is a diagram of a system architecture of a service flow transmission system to which a packet detection method is applicable according to an embodiment of this application;
FIG. 12 is a diagram of a service flow forwarding path according to an embodiment of this application;
FIG. 13 is a diagram of a principle of security detection performed by a security device according to an embodiment of this application;
FIG. 14 is a schematic flowchart 1 of a packet detection method according to an embodiment of this application;
FIG. 15 is a diagram 1 of an encapsulation format of detection marking information according to an embodiment of this application;
FIG. 16 is a diagram 2 of an encapsulation format of detection marking information according to an embodiment of this application;
FIG. 17 is a diagram 3 of an encapsulation format of detection marking information according to an embodiment of this application;
FIG. 18 is a schematic flowchart 2 of a packet detection method according to an embodiment of this application;
FIG. 19 is a schematic flowchart 1 of security detection performed by a security device according to an embodiment of this application;
FIG. 20 is a schematic flowchart 2 of security detection performed by a security device according to an embodiment of this application;
FIG. 21 is a schematic flowchart 3 of a packet detection method according to an embodiment of this application;
FIG. 22 is a schematic flowchart 4 of a packet detection method according to an embodiment of this application;
FIG. 23 is a diagram of an application of a packet detection method according to an embodiment of this application;
FIG. 24 is a diagram of a structure of a security device 100 according to an embodiment of this application;
FIG. 25 is a diagram of a structure of a security device 200 according to an embodiment of this application;
FIG. 26 is a diagram of a structure of a network device 300 according to an embodiment of this application;
FIG. 27 is a diagram of a structure of a network device 400 according to an embodiment of this application;
FIG. 28 is a diagram of a structure of a network device 500 according to an embodiment of this application;
FIG. 29 is a diagram of a structure of a network device 600 according to an embodiment of this application;
FIG. 30 is a diagram of a structure of a network management analyzer 700 according to an embodiment of this application; and
FIG. 31 is a diagram of a structure of a network management analyzer 800 according to an embodiment of this application.

### DESCRIPTION OF EMBODIMENTS

The following describes the technical solutions in embodiments of this application with reference to the accompanying drawings in embodiments of this application.

The terms "first" and "second" mentioned below are merely intended for a purpose of description, and shall not be understood as an indication or implication of relative importance or implicit indication of the quantity of indicated technical features. Therefore, a feature limited by "first", "second", and the like may explicitly or implicitly include one or more features.

In embodiments of this application, the terms such as "example" or "for example" are used to represent giving an example, an illustration, or a description. Any embodiment or design solution described as an "example" or "for example" in embodiments of this application should not be explained as being more preferred or having more advantages than another embodiment or design solution. To be precise, use of the word such as "example" or "for example" is intended to present a relative concept in a specific manner.

In descriptions of embodiments of this application, "a plurality of' means two or more, unless otherwise specified. A term "and/or" in this specification describes only an association relationship between associated objects and indicates that there may be three relationships. For example, A and/or B may represent the following three cases: Only A exists, both A and B exist, and only B exists.

A firewall (firewall) technology is a technology that helps a computer network to build a protective shield that isolates an internal network and an external network, to protect security of user data and information.

A function of the firewall technology is mainly to detect and process potential security risk and data transmission problems during running of the computer network in a timely manner. Processing measures include isolation and protection. In addition, operations in computer network security can be recorded and detected, to ensure running security of the computer network, ensure integrity of user data and information, and provide better and more secure computer network experience for a user.

Currently, when finding that a computer network is attacked in a running process, a firewall blocks some packets, for example, discards a data packet (also referred to as a "packet loss"), to ensure running security of the computer network. However, network operations and maintenance personnel can neither learn of a cause of a traffic packet loss, nor learn of a packet forwarding path on which a threat exists in the network. Consequently, this affects service security.

Based on the foregoing research, embodiments of this application provide a packet detection method, an electronic device, and a computer-readable storage medium. Detection marking information is set in a packet, and a risk is indicated in the service packet based on the detection marking information, to assist a management and analysis layer in identifying a service flow forwarding path on which a risk exists.

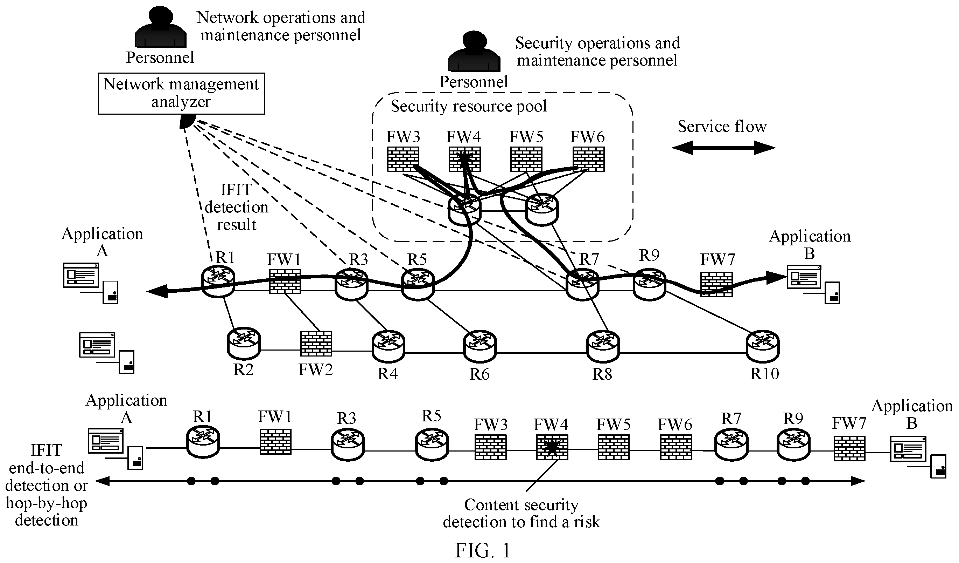

FIG. 1 is a diagram of an application scenario of a packet detection method according to an embodiment of this application. Devices in FIG. 1 are deployed based on a service function chain programming technology.

Service function chaining (service function chaining, SFC) is a technology that provides ordered services for an application layer. The service function chaining connects services on devices at a logical layer, to form a combination of ordered services. The service function chaining adds service function chain path information to an original packet, so that the packet passes through the device in sequence according to a specified path.

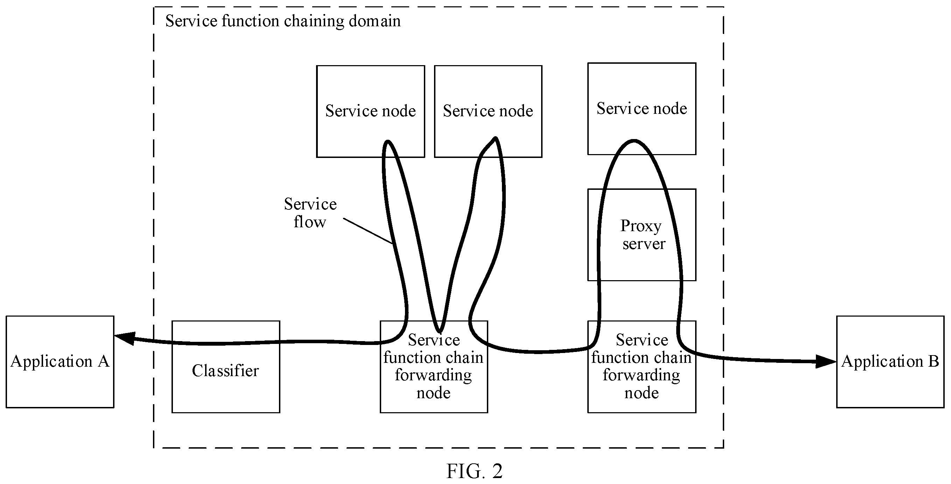

Different devices can play different roles in an entire service function chaining system according to different use functions. As shown in FIG. 2, roles in the service function chaining mainly include a classifier (service classifier, SC), a service node (service function, SF), a proxy server (proxy server), and a service function chain forwarding node (service function forwarder, SFF).

The classifier is located at a border ingress of an SFC domain. After entering a detection domain, a packet of an application A first enters the classifier. The classifier performs traffic classification, sets a service identifier, and encapsulates the packet with a service packet header. The SFC domain is an area including SFC devices, for example, an area from R1 to R10 and from FW1 to FW7 in FIG. 1.

The service node is a device that provides a value-added service, including a firewall (firewall) and a load balancer.

The proxy server is located between a service function chain forwarding node and an associated SF, and deletes or adds network service header (network service header, NSH) encapsulation information for the SF.

The service function chain forwarding node is configured to forward a packet received from a network to several SFs associated with the SFF. After processing the packet, the SF returns a packet to the same SFF for forwarding by the SFF.

When a packet of an application is transmitted on a network, the packet usually needs to pass through various service nodes, to ensure that the network can provide a secure, fast, and stable service for a user according to pre-planning. These service nodes include a well-known firewall, a load balancer (load balancer, LB), and the like. Traffic needs to pass through these service nodes in a specified sequence required by a service logic, to implement a required service.

In FIG. 1, FW1, FW2, FW3, FW4, FW5, FW6, and FW7 are security devices, such as firewalls. R1, R2, R3, R4, R5, R6, R7, R8, R9, and R10 are network devices. In FIG. 1, the security device FW3, the security device FW4, the security device FW5, and the security device FW6 form a security resource pool. The security resource pool and the security devices are managed and maintained by security operations and maintenance personnel. A network management analyzer is managed and maintained by network operations and maintenance personnel. The network devices are centrally managed by the network management analyzer. In addition, the network management analyzer can perform unified path orchestration for the security devices and the network devices by service function chaining, so that a service flow can be transmitted based on an orchestrated path.

As shown in FIG. 1, a service flow of an application A can be forwarded from the network device R1, and reaches an application B through the security device FW1, the network device R3, the network device R5, the security device FW3, the security device FW4, the security device FW5, the security device FW6, the network device R7, the network device R9, and the security device FW7.

When a service flow in FIG. 1 is transmitted based on an orchestrated path, and passes through a network device, the network device can detect a packet loss and a delay of the service flow.

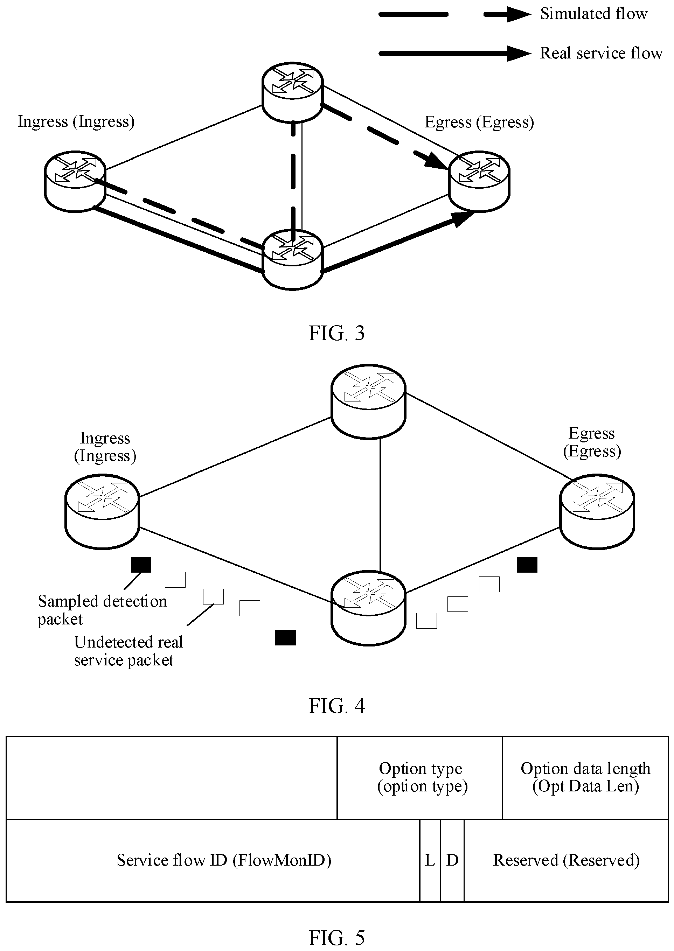

FIG. 3 is a diagram of a principle of out-of-band detection according to an embodiment of this application. A network device can detect a delay, a packet loss, and the like of an input service flow by out-of-band detection, such as a two-way active measurement protocol (two-way active measurement protocol, TWAMP), a packet internet groper (Ping), and a trace router (trace router, Tracert). Out-of-band detection is a detection manner in which detection is implemented by constructing a detection packet and sending an additional simulated flow. As shown in FIG. 3, an ingress network device (ingress) can send a simulated flow to an egress network device (egress). However, in an actual application of out-of-band detection, a forwarding path of the simulated flow may be different from a forwarding path of a real service flow, resulting in low detection accuracy.

FIG. 4 is a diagram of a principle of in-band detection according to an embodiment of this application. A network device can also detect problems such as a delay and a packet loss of a service flow by in-band detection. For example, in-band detection is used in the Y.1731 protocol and the Y.1711 protocol. In-band detection can insert a sampled detection packet into an input service flow. As shown in FIG. 4, an ingress network device can insert a sampled detection packet into an input service flow, and send the sampled detection packet to an egress network device, to detect a delay and a packet loss of the service flow. In in-band detection, sampled detection packets are sent at intervals. Therefore, detection precision is low.

To improve detection accuracy, in embodiments of this application, an in-situ flow information telemetry (in-situ flow information telemetry, IFIT) technology is used to detect a delay, a packet loss, and the like of a service flow. During in-situ flow information telemetry, a head node encapsulates an IFIT packet header into a packet.

It may be understood that, in different network environments, packet types are different, and correspondingly, encapsulation of an IFIT packet header also differs. For example, in an internet protocol version 6 (internet protocol version 6, IPv6) network environment, the packet is an IPv6 packet, and the IFIT packet header is encapsulated in an IPv6 packet header. For another example, in a segment routing over IPv6 (segment routing over IPv6, SRv6) network environment, the packet is an SRv6 packet, and the IFIT packet header is encapsulated in a segment routing header (segment routing header, SRH) of the SRv6 packet. For another example, in a multiprotocol label switching (multiprotocol label switching, MPLS) network environment, the packet is an MPLS packet, and the IFIT packet header is encapsulated in an MPLS packet header of the MPLS packet. The following uses the IPv6 network environment as an example for description. FIG. 5 shows an IFIT encapsulation format of the IPv6 packet in the IPv6 network environment. In FIG. 5, an extension packet header of an IPv6 packet includes an option type (option type) field, an option data length (Opt Data Len) field, a service flow identification (FlowMonID) field, an L field, a D field, and a reserved (Reserved) field. Opt Data Len is a length of data in the option type, L is a packet loss detection coloring flag bit, and D is a delay detection coloring flag bit. In an example, a length of the option type field is 8 bits (bits), a length of the Opt Data Len field is 8 bits, a length of the FlowMonID field is 20 bits, a length of the L field is 1 bit, and a length of the D field is 1 bit.

It may be understood that FIG. 5 is merely a diagram of the IFIT encapsulation format of IPv6, and a sequence of fields in the figure is adjusted based on an actual requirement. For example, the D field is located after the L field. For another example, the D field is located before the L field. This is not specifically limited.

For specific descriptions of the foregoing fields, refer to related descriptions in the document "RFC9343 IPv6 Application of the Alternate-Marking Method". The foregoing document is incorporated into this application by reference in its entirety. Details are not described herein. The following uses the SRv6 network environment as an example for description. In the SRv6 network environment, an outer layer of an SRv6 packet is an IPv6 packet, but SRH information is added to an extension packet header of the IPv6 packet. Therefore, in the SRv6 network environment, an IFIT encapsulation format of the SRv6 packet can refer to FIG. 5.

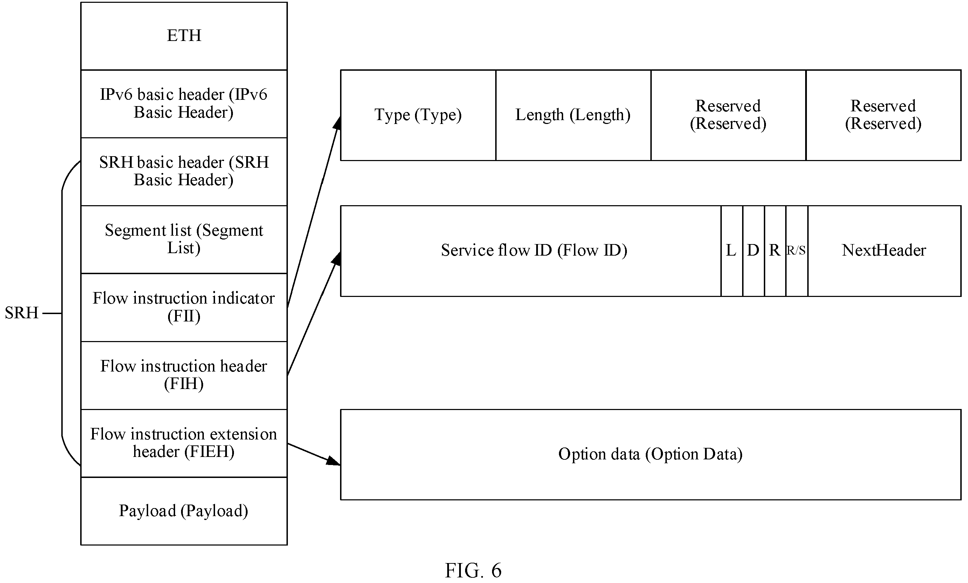

For ease of understanding, the following describes the IFIT encapsulation format of the SRv6 packet in detail. FIG. 6 is a diagram of the encapsulation format of the SRv6 packet in the SRv6 network environment according to an embodiment of this application. As shown in FIG. 6, the SRv6 packet includes an ETH field, an IPv6 Basic Header field, an SRH field, and a payload (Payload).

The ETH field carries a Layer 2 Ethernet header, and the ETH can carry a source MAC address, a destination MAC address, and a protocol type.

IPv6 Basic Header is an IPv6 basic header.

The SRH field includes an SRH Basic Header field, a Segment List field, and related information of in-situ flow information telemetry. SRH Basic Header is a basic extension header of SRH. The Segment List field carries a segment list indicating a service flow forwarding path. The related information of in-situ flow information telemetry includes a flow instruction indicator (Flow Instruction Indicator, FII) field, a flow instruction header (Flow Instruction Header, FIH) field, and a flow instruction extension header (Flow Instruction Extension Header, FIEH) field.

The FII field is mainly used to identify a start of an IFIT packet header and define an overall length of the IFIT packet header. The FII field includes a type (Type) field, a length (Length) field, and a reserved (Reserved) field. The Type field is used to identify an IFIT detection header, and the Length field is used to identify a length of the FIH field and a length of the FIEH field. In an example, a length of the Type field is 8 bits, and a length of the Length field is 8 bits.

The FIH field is mainly used to uniquely identify a service flow. Optionally, the FIH field includes a flow ID (Flow ID) field, an L field, a D field, an R field, an R/S field, and a NextHeader field. The Flow ID field is used to identify ID information of the service flow. L is a packet loss detection coloring flag bit. D is a delay detection coloring flag bit. R is a reserved flag bit, and is reserved for future extension. The R/S field indicates that if a guiding label is at the bottom of stack, R is retained, and is set to 1 by default, and if a guiding label is not at the bottom of stack, an S identifier is retained. The NextHeader field indicates whether an extension header is carried. For example, NextHeader being 0x00 indicates reserved; NextHeader being 0x01 indicates that the FIH is basic end-to-end detection information and does not carry an extension header; NextHeader being 0x02 indicates that the FIH is basic hop-by-hop detection information and does not carry an extension header; NextHeader being 0x03 indicates that the FIH is extended end-to-end detection information and carries an extension header, and the FIEH is valid; and NextHeader being 0x04 indicates that the FIH is extended hop-by-hop detection information and carries an extension header, and the FIEH is valid. In an example, a length of the Flow ID field is 20 bits, a length of the L field is 1 bit, a length of the D field is 1 bit, a length of the R field is 1 bit, a length of the R/S field is 1 bit, and a length of the NextHeader field is 8 bits.

The FIEH field is used to carry other information related to IFIT detection. The FIEH field includes option data (Option Data). Specific content in the FIEH field may be set based on a service requirement, and is not specifically limited. The packet detection method provided in embodiments of this application is not related to the FIEH field.

It may be understood that FIG. 6 is merely a diagram of the IFIT encapsulation format in the SRv6 network environment. A sequence of fields in the figure can be adjusted based on an actual requirement, and is not specifically limited.

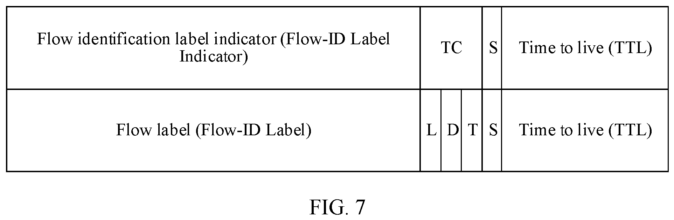

The following uses the MPLS network environment as an example to describe an IFIT encapsulation format of the MPLS packet in the MPLS network environment. For example, as shown in FIG. 7, the MPLS packet includes a TC field, an S field, a time to live (Time To Live, TTL) field, a flow identification label indicator (Flow-ID Label Indicator) field, a flow identification label (Flow-ID Label) field, an L field, a D field, and a T field. The Flow-ID Label Indicator is used to identify an IFIT detection header. The Flow-ID Label is used to identify ID information of a service flow. The TC field indicates a traffic class (Traffic Class) used to identify a corresponding traffic flow category, or a priority level. S indicates that when a guiding label is at the bottom of stack, R is retained; and if the guiding label is not at the bottom of stack, an S identifier is retained. L is a packet loss detection coloring flag bit. D is a delay detection coloring flag bit. The T field indicates a detection type. For example, when the T field is set to 1, end-to-end detection is indicated, and when the T field is set to 0, hop-by-hop detection is indicated. In an example, a length of the TC field is 3 bits, a length of the S field is 1 bit, a length of the TTL field is 8 bits, a length of the Flow-ID Label Indicator field is 20 bits, a length of the Flow-ID Label field is 20 bits, a length of the L field is 1 bit, a length of the D field is 1 bit, and a length of the T field is 1 bit.

For specific descriptions of the foregoing fields, refer to related descriptions in the document "Encapsulation For MPLS Performance Measurement with Alternate Marking Method". The foregoing document is incorporated into this application by reference in its entirety. Details are not described herein.

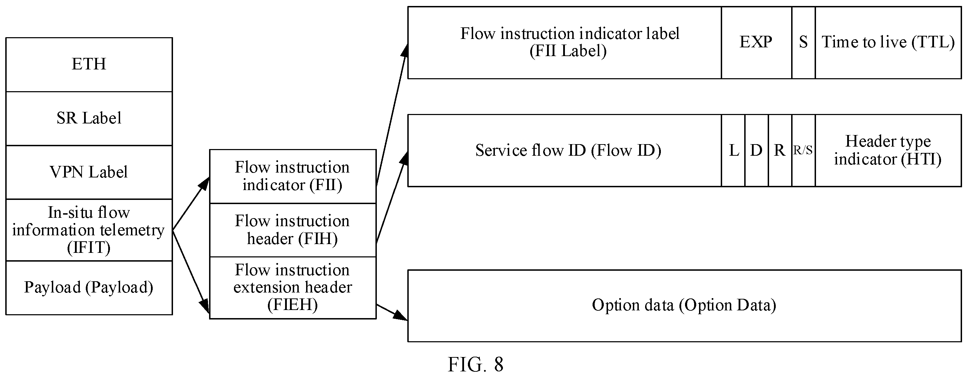

In an example, in the MPLS network environment, an encapsulation format of an MPLS packet is shown in FIG. 8. The MPLS packet shown in FIG. 8 includes an ETH field, an SR Label field, a VPN Label field, an IFIT field, and a payload (Payload). The ETH field carries a Layer 2 Ethernet header, and the ETH carries a source MAC address, a destination MAC address, and a protocol type. The SR Label field is used to carry a public network label. The VPN Label field is used to carry a private network label. The IFIT field includes an FII field, an FIH field, and an FIEH field. The FII field includes a flow instruction indicator label (FII Label) field, an EXP field, an S field, and a time to live (TTL) field. The FII Label field is used to identify an IFIT detection header. The EXP field is a priority EXP flag bit, and the priority EXP flag bit is determined based on some related information in an outer MPLS label header. The S field is used to identify whether a guiding label is at the bottom of stack, for example, a value of 1 indicates that the guiding label is at the bottom of stack, and a value of 0 indicates that the guiding label is not at the bottom of stack. The TTL field is determined by some related information in the outer MPLS label header. In an example, a length of the FII Label field is 20 bits, a length of the EXP field is 3 bits, a length of the S field is 1 bit, and a length of the TTL field is 8 bits.

The FIH field includes a Flow ID field, an L field, a D field, an R field, an R/S field, and a header type indicator (header type indicator, HTI) field. For the Flow ID field, the L field, the D field, the R field, and the R/S field, refer to the foregoing descriptions in the SRv6 network environment. The HTI is used to identify a range of nodes that need to send an IFIT detection result and a detection content range. For example, different marking values are used to distinguish whether detection is performed on a path node having an IFIT capability other than nodes at two ends, and whether an FIEH field is valid. In an example, a length of the Flow ID field is 20 bits, lengths of the L field, the D field, the R field, and the R field are 1 bit, and a length of the HTI field is 8 bits. The FIEH field is used to carry information related to IFIT detection. The FIEH field includes option data (Option Data). Specific content in the FIEH field may be set based on a service requirement, and is not specifically limited.

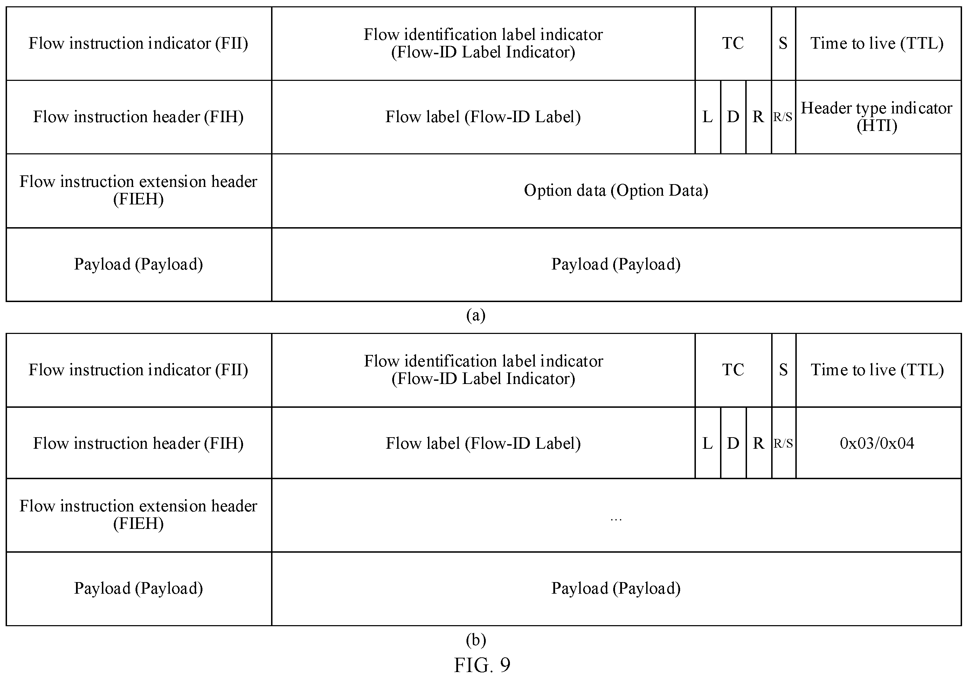

After the IFIT packet header is expanded, a format of the IFIT packet header is shown in (a) in FIG. 9. When the HTI is 0x03 or 0x04, the FIEH field is valid, and the encapsulation format is shown in (b) in FIG. 9.

It may be understood that FIG. 7, FIG. 8, and FIG. 9 are merely diagrams of an IFIT encapsulation format of MPLS. A sequence of fields in the figures can be adjusted based on an actual requirement, and is not specifically limited.

With IFIT encapsulation, a network device can color the packet loss detection coloring flag bit L and the delay detection coloring flag bit D during delay and packet loss detection, and counts colored packets within a fixed period to implement delay and packet loss detection. Coloring a packet means performing feature marking on a packet loss detection coloring flag bit L and a delay detection coloring flag bit D of the packet.

In an example, the network device implements feature marking by setting the packet loss coloring bit L and the delay coloring bit D. For example, when the packet loss detection coloring flag bit L is set to 1, it indicates that a packet loss is collected; when the packet loss detection coloring flag bit L is set to 0, it indicates that no packet loss is collected; when the delay detection coloring flag bit D is set to 1, it indicates that a timestamp is collected; and when the delay detection coloring flag bit D is set to 0, it indicates that no timestamp is collected.

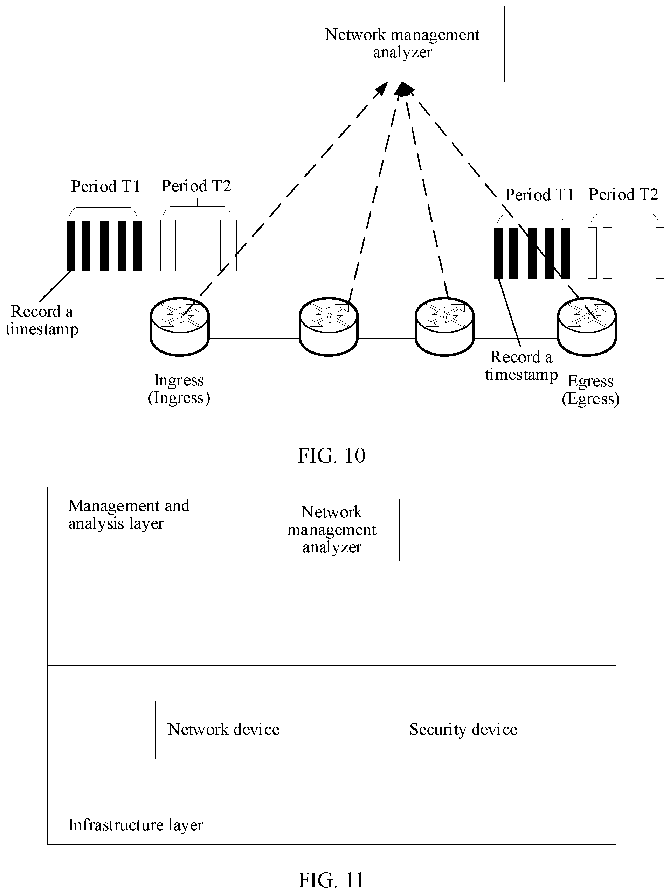

FIG. 10 is a diagram of a principle of in-situ flow information telemetry according to an embodiment of this application. As shown in FIG. 10, when a packet loss of a service flow is detected based on an in-situ flow information telemetry IFIT technology, head and tail nodes color a packet loss detection coloring flag bit L based on a fixed period and count packets, and report a counted quantity of packets to a network management analyzer. The network management analyzer compares a quantity of packets in each period to detect whether a packet loss occurs. For example, assuming that the head node sends five packets in a coloring period T2 and the tail node receives three packets in the coloring period T2. After the head node and the tail node report quantities of packets to the network management analyzer, the network management analyzer compares the quantities of packets reported by the head node and the tail node. It can be learned that two packets are lost in the coloring period T2.

Accordingly, when a delay of a service flow is detected based on the in-situ flow information telemetry IFIT technology, as shown in FIG. 10, the head node colors a delay detection coloring flag bit D and records, by recording a timestamp, time for sending a colored packet. The tail node also records, by recording a timestamp, time for receiving the colored packet. Then, the head and tail nodes report time information to the network management analyzer. The network management analyzer calculates a time difference to obtain a one-way delay of the packet.

The in-situ flow information telemetry technology mainly includes two manners: one is a hop-by-hop detection manner, and the other is an end-to-end detection manner. In the end-to-end detection, only the head and tail nodes sense a colored packet and an intermediate node does not process the packet, so that an end-to-end packet loss and delay of a service can be detected. In hop-by-hop detection, each hop of network device senses information about a colored packet and can detect a hop-by-hop packet loss and delay of a service.

In an example, in an initial state, network operations and maintenance personnel can deliver end-to-end IFIT packet loss detection for a service flow by using the network management analyzer. When a traffic packet loss is found, hop-by-hop IFIT in-situ flow packet loss detection is delivered to accurately determine a packet loss location. An IFIT detection result is reported to the control analyzer, and the control analyzer performs data analysis and sorting.

In embodiments of this application, an actual service packet is directly colored by using the in-situ flow information telemetry IFIT technology, so that a slight change of a network can be actively sensed, and packet loss and delay statuses of the network can be actually reflected.

The security device in FIG. 1 can be flexibly deployed at any location in the network in a pooling and centralized manner due to development of the service function chain programming technology. When a service flow passes through a security device, the security device can perform security detection on the service flow as required. When detecting a threat, the security device blocks the service flow or reports an alarm.

In this embodiment of this application, the security operations and maintenance personnel are responsible for the security devices and the security resource pool, and the network operations and maintenance personnel are responsible for managing the network devices. The security device does not support an in-situ flow information telemetry IFIT function, and the security device does not report a security detection result to the network management analyzer. Therefore, when the security device finds that a computer network is attacked in a running process, and blocks some packets, for example, discards a data packet (also referred to as "packet loss"), to ensure running security of the computer network. The network operations and maintenance personnel do not know a reason of the data packet loss. If the security device only generates an alarm for an attacked packet but does not block or discard the attacked packet, the network operations and maintenance personnel cannot learn of a service flow forwarding path on which a risk exists on the network. Consequently, this affects service security.

FIG. 11 is a diagram of a system architecture of a service flow transmission system to which a packet detection method is applicable according to an embodiment of this application. As shown in FIG. 11, the service flow transmission system provided in this embodiment of this application includes a management and analysis layer and an infrastructure layer. The management and analysis layer includes a network management analyzer. The infrastructure layer includes a plurality of network devices and security devices. The plurality of network devices and security devices are connected to each other through communication links, and are configured to transmit a service flow. In this embodiment of this application, the network device is configured to: forward a service packet of a type such as MPLS/SRv6, perform in-situ flow information telemetry on the service packet, and report in-situ flow information telemetry data to the network management analyzer. For example, the network device is a routing switching device.

In this embodiment of this application, the security device is configured to: forward a service packet of a type such as MPLS/SRv6, and perform security detection on the service packet. For example, the security device is a firewall.

In this embodiment of this application, the network management analyzer is configured to: manage the network devices, present a network topology, collect and integrate flow security status information uploaded by the network devices, and restore an attacked path. Optionally, the network management analyzer is one device or a set of a plurality of devices.

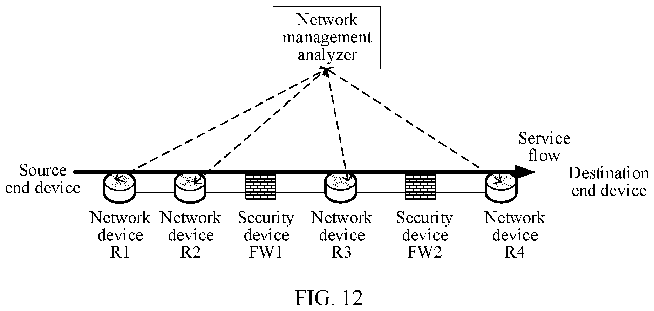

In an example, the plurality of network devices and security devices can be deployed, by the network management analyzer based on a service function chaining technology, as a service flow forwarding path shown in FIG. 12. On the service flow forwarding path, a network device R1 is a source node, a network device R2, a security device FW1, a security device FW2, and a network device R3 are intermediate nodes, and a network device R4 is a tail node.

Service flow data sent by a source end device can reach a destination end device along the service flow forwarding path through the network device R1, the network device R2, the security device FW1, the security device FW2, the network device R3, and the network device R4.

The source end device is a device that generates a service flow, for example, a node device in which the application A or the application B is located in FIG. 2. The destination end device is a node that receives the service flow, for example, a node device in which the application A or the application B is located in FIG. 2. For example, when a node device in which the application A is located is the source end device, a node device in which the application B is located is the destination end device.

In this embodiment of this application, to detect a delay and a packet loss of the service flow, when the service flow is forwarded from the network device R1 to the network device R4, network operations and maintenance personnel can deploy hop-by-hop in-situ flow information telemetry IFIT for the service flow by using the network management analyzer. That is, when a service packet passes through each network device, the network device can perform in-situ flow information telemetry IFIT, and perform reporting to the network management analyzer.

In this embodiment of this application, to implement security detection on the service flow, in a process in which the service flow is forwarded from the network device R1 to the network device R4 shown in FIG. 12, when a service packet passes through one or more security devices between the network device R1 and the network device R4, the security device can perform security detection on the service packet.

When performing security detection on the service packet, the security device can perform filtering matching on a five-tuple of the service packet according to a preset filtering rule, to control forwarding of the service packet. The filtering rule can be set based on an actual service requirement, and is not specifically limited herein. The five-tuple of the service packet is a source address, a destination address, a source port, a destination port, and a protocol type of the service packet.

In actual applications, a five-tuple of malicious traffic for content attacks changes frequently, or an inner payload (payload) in a same quintuple carries threat information. Therefore, a risk packet in a service flow cannot be detected only through five-tuple detection. To improve network running security, in embodiments of this application, security detection on a service packet further includes content security detection. A payload of the service packet is scanned, and packet features such as antivirus and content filtering are combined with five-tuple detection, to implement detection on a transport layer, a session layer, a presentation layer, and an application layer (L4 to L7) of the service packet.

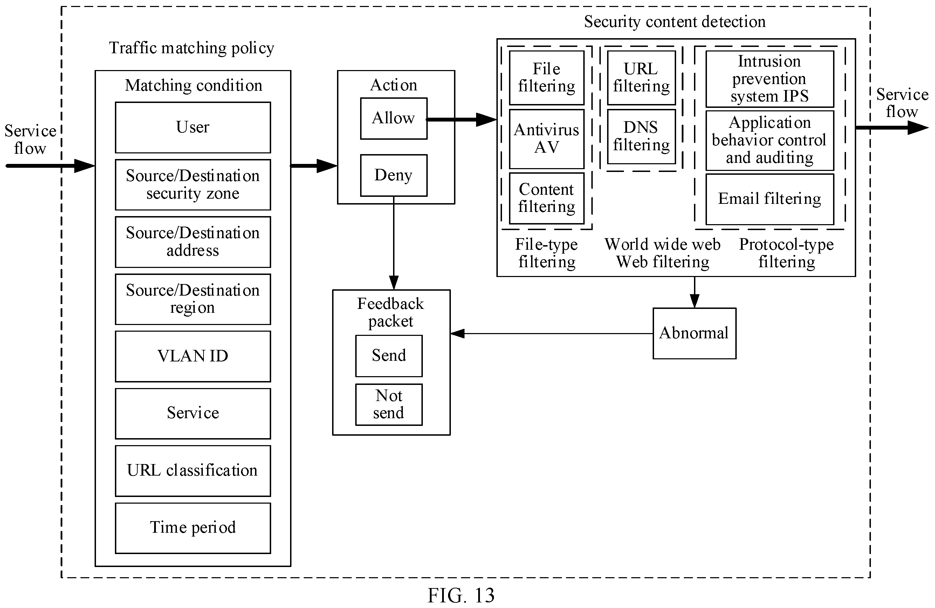

As shown in FIG. 13, for a service flow, a security device can first perform matching and filtering on a service packet according to a traffic matching policy. The traffic matching policy includes matching conditions such as user, source/destination security zone, source/destination address, source/destination region, VLAN ID, service, application, URL category, and time period. The security device can match service packets in the service flow based on the matching conditions to obtain a matching result, and then perform a corresponding response action (allow or deny) based on the matching result. When performing the deny action, the security device can feed back whether to send the packet, and can process the service packet, for example, generate an alarm or discard the service packet. When performing the allow action, the security device can further perform content security detection on the service packet. Content security detection generally includes protocol-type filtering, file-type filtering, and world wide web WEB filtering. The protocol-type filtering includes intrusion prevention system (intrusion prevention system, IPS), application behavior control and audit, mail filtering, and the like. The file-type filtering includes file filtering, antivirus (antivirus, AV), content filtering, and the like. The world wide web WEB filtering includes uniform resource locator (Uniform Resource Locator, URL) filtering, domain name system (Domain Name System, DNS) filtering, and the like. After performing content security detection, the security device can feed back, based on a security detection result, whether to send the service packet. It may be understood that when sending the service packet, the security device forwards the service packet to a next-hop device on a service flow forwarding path.

To help operations and maintenance personnel identify, by using a network management analyzer, a service packet in which a threat exists and a service flow forwarding path on which a threat exists in a service flow, in embodiments of this application, detection marking information that indicates security detection information is added to an IFIT packet header of the service packet. The network device reports the detection marking information to the network management analyzer, so that the network management analyzer can obtain, based on the detection marking information, a service flow forwarding path on which a risk exists in the service flow.

For example, after the security device performs security detection on the service packet, the security device can set the detection marking information based on a security detection result, to indicate whether a risk exists in the service packet. After receiving the service packet, the network device reports an IFIT detection result and the detection marking information to the network management analyzer. The network management analyzer receives the detection marking information, and identifies, based on the detection marking information, the service flow forwarding path on which a risk exists in the service flow. In this way, the operations and maintenance personnel can learn of, by using the network management analyzer, the service flow forwarding path on which a risk exists in the service flow.

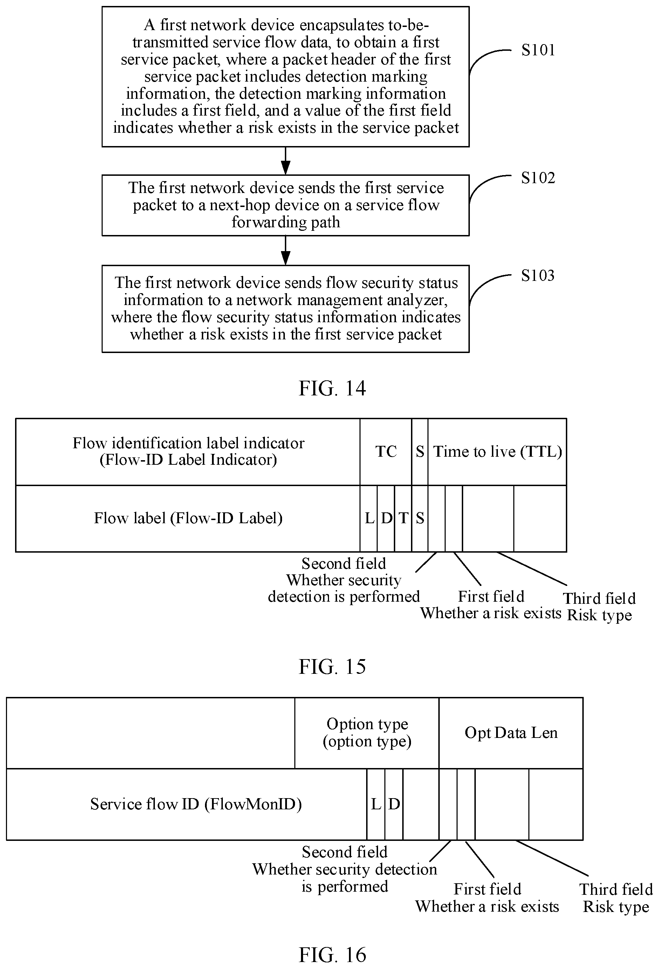

For ease of understanding, the following describes the packet detection method provided in embodiments of this application with reference to the accompanying drawings. FIG. 14 is a schematic flowchart of a packet detection method according to an embodiment of this application. The method shown in FIG. 14 can be applied to the service flow transmission system shown in FIG. 11, and is performed by a first network device. The first network device is a source node on a service flow forwarding path, for example, the network device R1 in FIG. 12. As shown in FIG. 14, the packet detection method provided in this embodiment of this application can include step S101 to step S103.

S101: The first network device encapsulates to-be-transmitted service flow data, to obtain a first service packet, where a packet header of the first service packet includes detection marking information, the detection marking information includes a first field, and a value of the first field indicates whether a risk exists in the service packet.

The service flow data is to-be-transmitted data, and is sent by a source end device to the first network device.

Optionally, to detect a packet loss and a delay of a service flow, when encapsulating the to-be-transmitted service flow data, the first network device performs in-situ flow information telemetry IFIT encapsulation on the to-be-transmitted service flow data.

It may be understood that when performing IFIT encapsulation on the to-be-transmitted service flow data, the first network device can perform encapsulation based on a current network environment. In this way, different types of service packets can carry the detection marking information, to assist a network management analyzer in identifying a risk service flow forwarding path. For example, if the current network environment is MPLS, the first network device encapsulates the service flow data based on an MPLS packet encapsulation format. In this way, the obtained first service packet is an MPLS protocol packet, and an IFIT packet header is located in an MPLS packet header of the first service packet. For another example, if the current network environment is SRv6, the first network device encapsulates the service flow data based on an SRv6 packet encapsulation format. In this way, the obtained first service packet is an SRv6 protocol packet, and an IFIT packet header is located in a segment routing header SRH of the first service packet. For the IFIT encapsulation formats in different network environments, refer to the descriptions in FIG. 5 to FIG. 9. Details are not described herein again.

In this embodiment of this application, to detect a service packet in which a risk exists in a service flow and a service flow forwarding path on which a risk exists, when performing IFIT encapsulation on the to-be-transmitted service flow data, the first network device encapsulates the detection marking information in the IFIT packet header.

In this embodiment of this application, the detection marking information includes a first field, and a value of the first field indicates whether a risk exists in the service packet.

In an example, to facilitate security detection and risk analysis on the service packet, in this embodiment of this application, the detection marking information may further include a second field and/or a third field. A value of the second field indicates whether security detection has been performed on the service packet, and a value of the third field indicates a risk type of a risk when the risk exists in the service packet.

In this embodiment of this application, the second field is set, so that the security device can perform security detection on a service packet based on a detection status indicated by the second field, so that the security device can perform targeted processing on the service packet, to improve processing efficiency.

In this embodiment of this application, the third field is set, and the third field indicates a risk type of a service packet, so that the network management analyzer can identify the risk type, to ensure service security. In different network environments, IFIT encapsulation on service packets differs. Therefore, encapsulation of the detection marking information also differs in the different network environments.

In an example, in an MPLS network environment, that is, when the service packet is an MPLS packet, based on the IFIT encapsulation format of the MPLS packet shown in FIG. 7, the detection marking information is set in a row in which the Flow-ID Label is located. For example, as shown in FIG. 15, the first field, the second field, and the third field are set by using the row in which the Flow-ID Label is located, that is, whether security detection has been performed, whether a risk exists, and a risk type are marked by using the row in which the Flow-ID Label is located.

In an example, in an SRv6 network environment, that is, when the service packet is an SRv6 packet, based on the IFIT encapsulation format shown in FIG. 5, the detection marking information is set in a row in which the FlowMonID is located. For example, as shown in FIG. 16, the first field, the second field, and the third field are set by using the row in which the FlowMonID is located, that is, whether security detection has been performed, whether a risk exists, and a risk type are marked by using the row in which the FlowMonID is located.

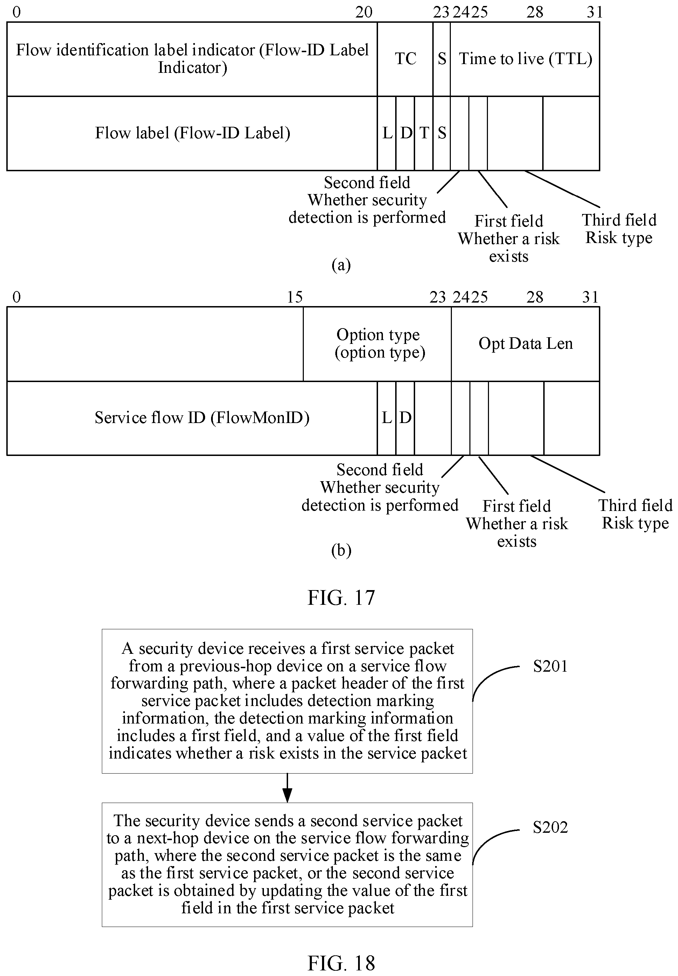

In an example, the first field occupies 1 bit, the second field occupies 1 bit, and the third field occupies 3 bits. In this way, the detection marking information is set in the service packet, so that the detection marking information does not occupy excessive bits, to increase an amount of data carried in the service packet. In an example, as shown in (a) in FIG. 17, the first field, the second field, and the third field are added to 5 bits, that is, bits 24 to 28, in a row in which a Flow-ID Label is located. In an example, as shown in (b) in FIG. 17, the first field, the second field, and the third field are set at 5 bits, that is, bits 24 to 28, in a row in which FlowMonID is located. In this way, impact on another field in the IFIT packet header can be avoided, and bit utilization can be improved.

It may be understood that the first network device is the source node on the service flow forwarding path, and security detection is not performed on the first service packet obtained by the first network device by encapsulation on the service flow forwarding path. Therefore, in this embodiment of this application, when the first network device encapsulates the packet, a value of the first field is set to a first value, and the first value indicates that no risk exists in the first service packet.

Correspondingly, because security detection has not been performed on the first service packet obtained by the first network device by encapsulation on the service flow forwarding path, a value of the second field is also set to a third value, and the third value indicates that security detection has not been performed on the first service packet. A value of the third field is also set to a fifth value, and the fifth value indicates that the risk type of the first service packet is to be set.

It may be understood that the first value, the third value, and the fifth value merely indicate security detection information represented by the first field, the second field, and the third field, and the first value, the third value, and the fifth value can be same values. For example, the first value, the third value, and the fifth value can all be 0, to indicate that no risk exists in the first service packet, security detection has not been performed on the first service packet, and the risk type of the first service packet is to be set.

In some embodiments of this application, the first value, the third value, and the fifth value may also be different values, and may be specifically set based on a service requirement. This is not limited in this application.

In this embodiment of this application, the risk type includes one or more of the following: a file-type risk, a protocol-type risk, and a world wide web WEB-type risk.

Refer to Table 1. Table 1 shows an example of the detection marking information. As shown in Table 1, when the value of the first field is 0, it indicates that no risk exists in the service packet; when the value of the first field is 1, it indicates that a risk exists in the service packet; when the value of the second field is 0, it indicates that security detection has not been performed on the service packet; when the value of the second field is 1, it indicates that security detection has been performed on the service packet; when the value of the third field is 0, it indicates that the risk type of the service packet is to be set; when the value of the third field is 1, it indicates that the risk type of the service packet is a risk type of file-type filtering; when the value of the third field is 2, it indicates that the risk type of the service packet is a risk type of protocol-type filtering; when the value of the third field is 3, it indicates that the risk type of the service packet is a risk type of world wide web WEB-type filtering; and when the value of the third field is 4 to 7, it indicates that the risk type of the service packet is reserved, and is specifically set based on a service requirement.

**Table 1**

| Detection marking information | | |
|---|---|---|
| Second field | First field | Third field |
| Whether security detection has been performed | Security detection result | Risk type |
| 0: no | 0: no risk | 0: to be set |
| 1: yes | 1: a risk exists | 1: file-type filtering |
| | | 2: protocol-type filtering |
| | | 3: world wide web WEB-type filtering |
| | | 4-7: reserved |

In this embodiment of this application, the detection marking information is encapsulated in the service packet, and a risk is indicated in the service packet based on the detection marking information, so that the network management analyzer can identify, based on the detection marking information in the service packet, a service flow forwarding path on which a risk exists, to ensure service security.

It may be understood that, after obtaining the first service packet by encapsulation, the first network device can forward the first service packet, to forward the first service packet to a destination end device. In addition, to facilitate the network management analyzer to identify a risk status of a service flow in a transmission process, after obtaining the first service packet by encapsulation, the first network device further sends the detection marking information of the first service packet to the network management analyzer. Therefore, after the first service packet is obtained, steps S102 and S103 are further included.

S102: The first network device sends the first service packet to a next-hop device on the service flow forwarding path.

S103: The first network device sends flow security status information to the network management analyzer, where the flow security status information indicates whether a risk exists in the first service packet.

In this embodiment of this application, the flow security status information includes flow identification information and the detection marking information of the first service packet. The flow identification information is identification information of a flow in which the first service packet is located, for example, a Flow ID in the IFIT packet header of the first service packet.

It may be understood that service packets of a same flow have same flow identification information. In an example, the flow identification information includes one or more of a source address, a source port, a destination address, and a destination port of the service packet.

Because the first network device performs in-situ flow information telemetry IFIT encapsulation on the service flow data, in order to obtain delay and packet loss statuses of the service flow, the flow security status information further includes in-situ flow information telemetry data. In an example, the in-situ flow information telemetry data includes information such as a timestamp of a first service packet whose delay detection coloring flag bit D is colored, a quantity of sent first service packets whose packet loss detection coloring flag bit L is colored, and a statistical period. In this embodiment of this application, the in-situ flow information telemetry data is uploaded to the network management analyzer, so that the network management analyzer can obtain delay information and packet loss information in the service flow based on the in-situ flow information telemetry data.

In this embodiment of this application, "source node/head node" and "tail node" are concepts for a service flow forwarding path, and "source address" and "destination address" are concepts for a source end device and a destination end device during transmission of a service packet in an entire network. The two concepts are different in scope.

In this embodiment of this application, the flow identification information and the detection marking information are uploaded to the network management analyzer, so that the network management analyzer can identify, based on the flow identification information and the detection marking information, a service flow forwarding path on which a risk exists in each service flow. In this embodiment of this application, the first network device serves as a source node on the service flow forwarding path, and after obtaining the first service packet by encapsulation, the first network device sends the first service packet to the next-hop device.

Optionally, the next-hop device of the first network device is another network device. For example, in the service flow forwarding path shown in FIG. 12, a next-hop device of the network device R1 is the network device R2, and the network device R2 is an intermediate node. Optionally, the next-hop device of the first network device is alternatively a security device, and is specifically determined by the service flow forwarding path.

For ease of understanding, the following describes a processing process of a security device on the service flow forwarding path with reference to the accompanying drawings. FIG. 18 is another schematic flowchart of a packet detection method according to an embodiment of this application. The method shown in FIG. 18 can be applied to the service flow transmission system shown in FIG. 11, and is performed by a security device. For example, the method may be performed by the security device FW1 or the security device FW2 in FIG. 12. As shown in FIG. 18, the packet detection method provided in this embodiment of this application further includes steps S201 and S202.

S201: The security device receives a first service packet from a previous-hop device on a service flow forwarding path, where a packet header of the first service packet includes detection marking information, the detection marking information includes a first field, and a value of the first field indicates whether a risk exists in the first service packet.

Optionally, for the security device, the previous-hop device on the service flow forwarding path is one of a first network device, a network device other than the first network device, or another security device, and is not specifically limited and is determined according to the service flow forwarding path.

For example, when the security device is the security device FW1 in FIG. 12, the previous-hop device on the service flow forwarding path is the network device R2. When the security device is the security device FW2 in FIG. 12, the previous-hop device on the service flow forwarding path is the network device R3.

In this embodiment of this application, the packet header of the first service packet received by the security device includes the detection marking information. For example, an IFIT packet header of the first service packet received by the security device includes the detection marking information. When the first service packet is an MPLS protocol packet, the IFIT packet header is located in an MPLS packet header of the first service packet. When the first service packet is an SRv6 protocol packet, the IFIT packet header is located in a segment routing header SRH of the first service packet.

In this embodiment of this application, the detection marking information includes the first field, and the value of the first field indicates whether a risk exists in the first service packet.

It may be understood that, when a first service packet obtained by the first network device by encapsulation includes a second field and a third field, the first service packet received by the security device also includes the second field and the third field. For explanations of the second field and the third field, refer to the foregoing descriptions. Details are not described herein again. The first service packet received by the security device may be different from the first service packet obtained by the first network device by encapsulation. For example, when the previous-hop device of the security device is a network device other than the first network device or another security device, the detection marking information of the first service packet received by the security device may be different from detection marking information of the first service packet sent by the first network device.

S202: The security device sends a second service packet to a next-hop device on the service flow forwarding path, where the second service packet is the same as the first service packet, or the second service packet is obtained by updating the value of the first field in the first service packet. The first service packet is a service packet that is received by the security device from the previous-hop device, and the second service packet is a service packet that is sent by the security device to the next-hop device on the service flow forwarding path.

Optionally, the second service packet is the same as the first service packet, or is obtained by updating the detection marking information in the first service packet, for example, by updating the value of the first field in the first service packet.

For example, when the security device does not perform security detection on the received first service packet, but only forwards the first service packet, the second service packet is the same as the first service packet.

For example, after performing security detection on the received first service packet, the security device can update the value of the first field in the first service packet based on a security detection result indicating whether a risk exists in the first service packet, to obtain the second service packet. In this case, the second service packet is obtained by updating the value of the first field in the first service packet.

In this embodiment of this application, the security device may determine, according to a preset detection policy, whether to perform security detection on the received first service packet. Optionally, the preset detection policy is determining, based on the detection marking information in the first service packet, whether to perform security detection on the first service packet.

For example, after receiving the first service packet, the security device can parse a frame header of the first service packet, to obtain the detection marking information of the first service packet, and then determine, based on the detection marking information and the preset detection policy, whether security detection needs to be performed on the first service packet.

In an example, in this embodiment of this application, determining, based on the detection marking information in the first service packet, whether to perform security detection on the first service packet includes the following (1) to (5).
(1) In response to a value of the second field in the detection marking information in the first service packet being a third value, the security device performs security detection on the first service packet.
   The third value indicates that security detection has not been performed on the first service packet. Therefore, when the value of the second field in the detection marking information in the first service packet is the third value, it indicates that security detection has not been performed on the first service packet. To ensure security of a network device, the security device performs security detection on the first service packet. It may be understood that, when security detection has not been performed on the first service packet, the value of the first field is a second value and a value of the third field is a fifth value in the first service packet.
(2) In response to the value of the second field in the detection marking information in the first service packet being a fourth value, the security device does not perform security detection on the first service packet.
   The fourth value indicates that security detection has been performed on the first service packet. Therefore, when the value of the second field in the detection marking information in the first service packet is the fourth value, it indicates that security detection has been performed on the first service packet. To save resources and reduce workload, in this embodiment of this application, the security device does not perform security detection on the first service packet.
(3) In response to the value of the first field in the detection marking information in the first service packet being a first value, the security device performs security detection on the first service packet. The first value indicates that no risk exists in the first service packet. When the value of the first field in the detection marking information in the first service packet is the first value, it indicates that no risk exists in the first service packet. In this case, to further ensure security, the security device performs security detection on the first service packet regardless of whether security detection has been performed on the first service packet, that is, regardless of whether the value of the second field is the third value or the fourth value. It may be understood that, when the value of the first field in the detection marking information in the first service packet is the first value, the value of the third field is the fifth value, and the fifth value indicates that a risk type of the first service packet is to be set.
(4) In response to the value of the first field in the detection marking information in the first service packet being the second value, the security device performs security detection on the first service packet.
   The second value indicates that a risk exists in the first service packet. When the value of the first field in the detection marking information in the first service packet is the second value, it indicates that security detection has been performed on the first service packet and a risk exists. In this case, to further determine a risk status, the security device performs security detection on the first service packet.
(5) In response to the value of the first field in the detection marking information in the first service packet being the second value, the security device does not perform security detection on the first service packet.

When the value of the first field in the detection marking information in the first service packet is the second value, it indicates that security detection has been performed on the first service packet, and a risk exists. In this case, to ensure network security, the first service packet can be directly blocked, and security detection does not need to be performed.

It may be understood that, when the value of the first field in the detection marking information in the first service packet is the second value, the value of the second field is the fourth value, and the value of the third field is a value corresponding to a detected risk type.

It may be understood that the foregoing listed detection policy is merely an example, and the detection policy in this embodiment of this application may further include more manners. For example, to ensure network security, in some embodiments, the security device performs security detection on each received first service packet. This is specifically set based on an actual requirement, and is not specifically limited in this application.

In this embodiment of this application, the preset detection policy is set, and whether to perform security detection on the first service packet is determined based on the detection marking information in the first service packet, so that a security detection manner of a service packet can be dynamically and flexibly adjusted, to facilitate refined network security operations and maintenance.

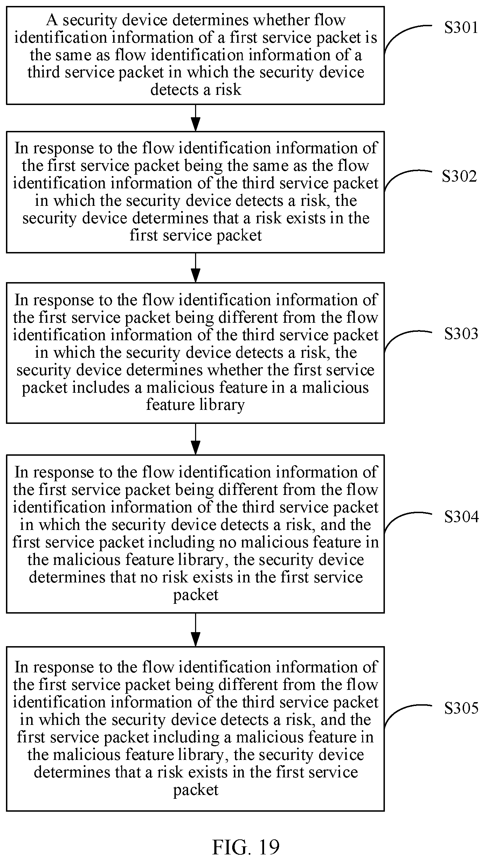

To improve security of network transmission, in this embodiment of this application, before step S202, that is, before the security device sends the second service packet to the next-hop device on the service flow forwarding path, the security device can further perform security detection on the first service packet. FIG. 19 is a schematic flowchart of security detection performed by a security device according to an embodiment of this application. As shown in FIG. 19, in this embodiment of this application, steps for the security device to perform security detection on a first service packet include steps S301 to S305.

S301: The security device determines whether flow identification information of the first service packet is the same as flow identification information of a third service packet in which the security device detects a risk.

S302: In response to the flow identification information of the first service packet being the same as the flow identification information of the third service packet in which the security device detects a risk, the security device determines that a risk exists in the first service packet.

S303: In response to the flow identification information of the first service packet being different from the flow identification information of the third service packet in which the security device detects a risk, the security device determines whether the first service packet includes a malicious feature in a malicious feature library.

S304: In response to the flow identification information of the first service packet being different from the flow identification information of the third service packet in which the security device detects a risk, and the first service packet including no malicious feature in the malicious feature library, the security device determines that no risk exists in the first service packet.

S305: In response to the flow identification information of the first service packet being different from the flow identification information of the third service packet in which the security device detects a risk, and the first service packet including a malicious feature in the malicious feature library, the security device determines that a risk exists in the first service packet.

In this embodiment of this application, a packet header of the first service packet further includes the flow identification information. After parsing a frame header of the first service packet, the security device may obtain the flow identification information of the first service packet.

In this embodiment of this application, the third service packet is a service packet on which the security device has performed security detection before and in which a risk is detected, and the security device stores the flow identification information of the third service packet.

To further ensure network security, in this embodiment of this application, after receiving the first service packet, the security device matches the flow identification information of the first service packet with the flow identification information of the third service packet in which a risk exists, and further performs content security detection on the first service packet. In this way, security detection on the first service packet is implemented in a plurality of dimensions, so that network security can be improved, and a risk service packet in which a potential threat exists can be identified, to assist a management and analysis layer in identifying an attacked service flow forwarding path based on the service packet in which a potential threat exists.

Optionally, when content security detection is performed on the first service packet, the first service packet is first scanned, to obtain a packet feature in the first service packet. Then, matching is performed between the packet feature and a malicious feature in the malicious feature library, to detect whether the first service packet includes the malicious feature in the malicious feature library.

Optionally, the malicious feature in the malicious feature library is pre-constructed and can be updated in real time or periodically. The malicious database includes malicious features of different risk types. For example, when the risk type is file-type filtering, the malicious feature includes a virus feature and a malicious file feature; and when the risk type is protocol-type filtering, the malicious feature includes a behavior intrusion feature and the like. It may be understood that malicious features of different risk types can be constructed based on an actual service requirement. This is not specifically limited herein.

It may be understood that, when the first service packet has a malicious feature, it is determined that a risk exists in the first service packet, and a risk type is a risk type corresponding to the malicious feature.

In an example, the security device first matches the flow identification information of the first service packet with the flow identification information of the third service packet, to determine whether the flow identification information of the first service packet is the same as the flow identification information of the third service packet, and if the flow identification information of the first service packet is different from the flow identification information of the third service packet, scans the first service packet to detect whether the first service packet includes a malicious feature in the malicious feature library.

In an example, the security device simultaneously matches the flow identification information of the first service packet with the flow identification information of the third service packet and scans the first service packet, that is, synchronously detects whether the first service packet includes a malicious feature in the malicious feature library and whether the flow identification information of the first service packet is the same as the flow identification information of the third service packet.

In an example, the security device first scans the first service packet to detect whether the first service packet includes a malicious feature in the malicious feature library, and then matches the flow identification information of the first service packet with the flow identification information of the third service packet, to determine whether the flow identification information of the first service packet is the same as the flow identification information of the third service packet.

In this embodiment of this application, when the security device learns that the flow identification information of the first service packet is the same as the flow identification information of the third service packet in which a risk is detected, the security device determines that the first service packet belongs to a service packet of a risk service flow, and further obtains a security detection result of the first service packet that indicates that a risk exists in the first service packet.

In this embodiment of this application, when the security device learns that the flow identification information of the first service packet is different from the flow identification information of the third service packet in which a risk is detected, and the security device detects that the first service packet does not include a malicious feature in the malicious feature library, the security device determines that the first service packet is neither a risk packet nor a packet of a risk service flow, and further obtains a security detection result of the first service packet that indicates that no risk exists in the first service packet.

In this embodiment of this application, when the security device learns that the flow identification information of the first service packet is different from the flow identification information of the third service packet in which a risk is detected, but the security device detects that the first service packet includes a malicious feature in the malicious feature library, the security device determines that the first service packet is a risk packet, and further obtains a security detection result of the first service packet that indicates that a risk exists in the first service packet.

Optionally, after learning that the first service packet includes a malicious feature in the malicious feature library, and determining that the first service packet is a risk packet, the security device updates the first service packet to the third service packet, to update stored flow identification information of a risk packet, and improve security.

In an example, to further enhance security detection and determine information about a risk, after the security device learns that the flow identification information of the first service packet is the same as the flow identification information of the third service packet in which a risk is detected, the security device detects whether the first service packet includes a malicious feature in the malicious feature library.

In this embodiment of this application, when the security detection result indicates that the flow identification information of the first service packet is the same as the flow identification information of the third service packet, but the first service packet does not include a malicious feature, it indicates that the first service packet belongs to a packet of a risk service flow. A risk exists in the first service packet, but belongs to a potential threat, and the first service packet does not belong to a risk packet. However, when the security detection result indicates that the flow identification information of the first service packet is the same as the flow identification information of the third service packet, and the first service packet includes a malicious feature, it indicates that the first service packet belongs to a risk packet and has a threat.

In this embodiment of this application, matching is performed between the flow identification information of the first service packet and the flow identification information of the third service packet in which a risk exists, and content security detection is performed on the first service packet, to implement security detection on the first service packet in a plurality of dimensions, so that network security is improved. In addition, a risk service packet in which a potential threat exists can be identified, to assist the management and analysis layer in identifying an attacked service flow forwarding path based on the service packet in which a potential threat exists.

In this embodiment of this application, after performing security detection on the first service packet, the security device updates detection marking information in the first service packet based on the security detection result, to obtain a second service packet.

For example, a value of a second field in the detection marking information in the first service packet is a third value. After performing security detection on the first service packet, the security device sets the value of the second field in the detection marking information in the first service packet to a fourth value. The fourth value indicates that security detection has been performed on the first service packet. In addition, the security device updates a value of a first field and a value of a third field in the detection marking information based on the security detection result, to obtain the second service packet.

If the security detection result of the first service packet indicates that a risk exists in the first service packet, the value of the first field in the detection marking information is set to a second value. The second value indicates that a risk exists in the first service packet. If the security detection result of the first service packet indicates that no risk exists in the first service packet, the value of the first field in the detection marking information is a first value.

After the security device detects that a risk exists in the first service packet, the security device sets the value of the third field based on a detected risk type. For example, when detecting that a risk type of file-type filtering exists in the first service packet, the security device may set the value of the third field to a sixth value. The sixth value indicates that the risk type of file-type filtering exists in the first service packet. For another example, when detecting that a risk type of protocol-type filtering exists in the first service packet, the security device sets the value of the third field to a seventh value. The seventh value indicates that the risk type of protocol-type filtering exists in the first service packet. For another example, when detecting that a risk type of world wide web WEB filtering exists in the first service packet, the security device may set the value of the third field to an eighth value. The eighth value indicates that the risk type of world wide web WEB filtering exists in the first service packet. As shown in Table 1, the sixth value is 1, the seventh value is 2, and the eighth value is 3.

For example, when the value of the second field in the detection marking information in the first service packet is the fourth value, and the value of the first field is the first value, after the security device performs security detection on the first service packet, if the security detection result of the first service packet indicates that a risk exists in the first service packet, the security device sets the value of the first field in the detection marking information to the second value, and sets the value of the third field based on a detected risk type, to obtain the second service packet. If the security detection result of the first service packet indicates that no risk exists in the first service packet, the value of the first field is still the first value, and correspondingly, the value of the third field is still a fifth value. In this case, the obtained second service packet is the same as the first service packet.

For example, when the value of the second field in the detection marking information in the first service packet is the fourth value, and the value of the first field is the second value, after the security device performs security detection on the first service packet, if the security detection result of the first service packet indicates that a risk exists in the first service packet, the value of the first field in the detection marking information is still the second value, and the value of the third field can be updated based on a detected risk type, to obtain the second service packet. It may be understood that, when the security device does not detect a new risk type, the value of the third field remains unchanged, and the obtained second service packet is the same as the first service packet.

When the value of the first field in the detection marking information in the first service packet is the second value, after the security device performs security detection on the first service packet, if the security detection result of the first service packet indicates that no risk exists in the first service packet, to ensure service security, the detection marking information is not updated, that is, the value of the first field in the detection marking information is still the second value, and the value of the third field remains unchanged. In this case, the obtained second service packet is the same as the first service packet.

In this embodiment of this application, the detection marking information is updated based on the security detection result, so that the detection marking information can accurately indicate a risk status of the service packet, and a network management analyzer can identify, based on the detection marking information in the service packet, a service flow forwarding path on which a risk exists, to ensure service security.

After obtaining the second service packet, the security device sends the second service packet to a next-hop device on a service flow forwarding path.

In an example, the security device sends the second service packet to the next-hop device on the service flow forwarding path according to a forwarding policy. For example, the following (1) to (3) are included:
(1) In response to the security detection result of the first service packet by the security device indicating that no risk exists in the first service packet, the security device sends the second service packet to the next-hop device on the service flow forwarding path.
   When the flow identification information in the first service packet is different from the flow identification information of the third service packet, and the first service packet does not include a malicious feature, no risk exists in the first service packet. In this case, the second service packet is sent to the next-hop device on the service flow forwarding path, to ensure normal packet forwarding.
(2) In response to the security detection result of the first service packet by the security device indicating that a risk exists in the first service packet, the security device sends the second service packet to the next-hop device on the service flow forwarding path.

In an example, to ensure network security, when the security detection result indicates that a risk exists in the first service packet, that the security device sends the second service packet to the next-hop device on the service flow forwarding path means that when it is detected that the flow identification information in the first service packet is the same as the flow identification information in the third service packet, but the first service packet does not include a malicious feature, sending the second service packet to the next-hop device on the service flow forwarding path. That is, when the first service packet belongs to a packet of a risk service flow and has a potential threat, the obtained second service packet is sent to the next-hop device on the service flow forwarding path.

It may be understood that, in this case, a value of a first field in the sent second service packet indicates that a risk exists in the second service packet, and a risk type indicated by a value of a third field is the same as that of the third service packet. In this case, that a risk exists in the second service packet means that the second service packet belongs to a packet of a risk service flow and has a potential threat.

In an example, during security detection, if it is detected that the flow identification information of the first service packet is the same as the flow identification information of the third service packet, and the first service packet includes a malicious feature, that is, the first service packet is a risk packet, the obtained second service packet is blocked.

In an example, during security detection, if it is detected that the flow identification information of the first service packet is different from the flow identification information of the third service packet, but the first service packet includes a malicious feature, that is, the first service packet is a risk packet, the obtained second service packet is blocked.

In this embodiment of this application, a service packet having a malicious feature is blocked, so that network security can be improved, and a risk packet in which a threat exists does not affect network security.

(3) In response to the value of the second field in the detection marking information in the first service packet being the fourth value and the value of the first field being the first value, the security device sends the second service packet to the next-hop device on the service flow forwarding path.

If the value of the second field in the first service packet is the fourth value, and the value of the first field is the first value, it indicates that security detection has been performed on the first service packet, and no risk exists. To save resources and reduce workload, the security device can directly send the second service packet to the next-hop device on the service flow forwarding path without performing security detection. In this case, the sent second service packet is the same as the first service packet.

In this embodiment of this application, when the value of the second field in the detection marking information is the fourth value and the value of the first field is the first value, the security device directly sends the second service packet to the next-hop device on the service flow forwarding path, so that resources can be saved and workload can be reduced.

In an example, to facilitate the security device to perform security detection on the service packet, the security device records flow identification information of each service flow by using a session table, and implements security detection on the service packet based on the session table.

For example, for each service flow, after receiving a service packet of the service flow for the first time, the security device establishes a session table based on the service packet received for the first time, then performs security detection on the service packet of the service flow based on the session table, and performs a service packet forwarding procedure by using the session table.

In an example, the session table includes the following content:
Current Total Sessions :1
icmp VPN:public-->public ID:a58f3a20d0900198275d3847c2
Zone:trust-->untrust TTL:00:00:20 Left:00:00:04
Recv Interface:GigabitEthernet1/0/2
Interface: GigabitEthernet1/0/4 NextHop:1.1.1.2 MAC:707b-e8c8-0a76
<--packets:10 bytes:600 --> packets:10 bytes:600
2.2.2.2.1-->1.1.1.2:2048 PolicyName:Allow Admin Ping

In the foregoing example, Current Total Sessions is a current total quantity of session tables, and icmp is a protocol name in the session table. The 1^{st} public in VPN:public->public indicates a source VPN, and the 2^{nd} public indicates a destination VPN. ID is an ID of a current session, and Zone indicates a security zone. In Zone:trust->untrust, trust indicates a source zone, and untrust indicates a destination zone. TTL is time to live of the session table, Left is remaining time of the session table, Recv Interface is an ingress interface, Interface is an egress interface, NextHop is a gateway address, MAC is a next-hop MAC address, <--packets is a quantity of reverse packets,--> packets is a quantity of forward packets, 2.2.2.2.1-->1.1.1.2:2048 is a source IP/port and a destination IP address/port, and PolicyName indicates a security policy that a packet matches.

In an example, for each service flow, after detecting the third service packet in which a risk exists in the service flow, the security device marks a risk in a session table of the service flow, to indicate that a risk exists in the service flow.

In an example, the security device matches flow identification information of each received first service packet with flow identification information marked with a risk mark in the session table, to detect a first service packet in which a risk exists. In this embodiment of this application, the flow identification information and the security policy are recorded in the session table, to facilitate security detection by the security device, and improve processing efficiency of the security device. In some embodiments of this application, a trustlist is set for a specific service flow, and the trustlist includes flow identification information of the specific service flow. When the flow identification information of the first service packet is obtained, the security device matches the flow identification information of the first service packet with the flow identification information in the trustlist, and if the flow identification information of the first service packet is the same as the flow identification information in the trustlist, forwards the first service packet without performing security detection, to improve processing efficiency. If the flow identification information of the first service packet is different from the flow identification information in the trustlist, security detection needs to be performed on the first service packet.

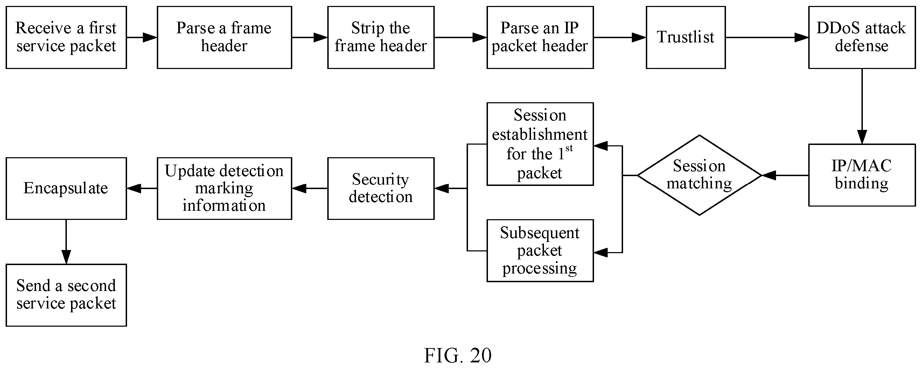

FIG. 20 is a schematic flowchart of detection performed by a security device. After receiving a first service packet, the security device parses a frame header of the first service packet, strips the frame header of the first service packet, and parses an IP packet header to obtain detection marking information and flow identification information of the first service packet. Basic security detection such as trustlist detection, distributed denial of service (distributed denial of service, DDoS), and attack defense detection is performed based on the flow identification information, and IP/MAC address binding is performed. Then, a session is matched based on the flow identification information, to detect whether a session needs to be established. If the first service packet is the 1^{st} packet of a service flow, and no matched session is found, a session establishment procedure for the 1^{st} packet is performed, and security detection is performed according to a security policy. If the first service packet is not the 1^{st} packet of the service flow, and a matched session is found, a subsequent packet processing procedure is performed, and security detection is performed according to a security policy in a session table. The security detection includes detecting whether a malicious feature in a malicious database is included, and detecting whether the flow identification information is the same as flow identification information of a third service packet in which a risk is detected. After detection is completed, the detection marking information in the first service packet is updated based on a security detection result, packet encapsulation is performed based on the updated detection marking information, to obtain a second service packet, and the second service packet is sent to a next-hop device on a service flow path.

For a specific process of parsing the frame header by the security device, stripping the frame header, the trustlist, IP/MAC address binding, establishing a session for the 1^{st} packet, and encapsulating, refer to the conventional technology. Details are not described herein.

In this embodiment of this application, a plurality of types of detection such as trustlist detection, distributed denial of service, attack defense detection, and security detection are performed on a service packet, so that network security can be improved. In addition, the detection marking information is updated based on the security detection result, so that the detection marking information can accurately indicate a risk status of the service packet, and a network management analyzer can identify, based on the detection marking information in the service packet, a service flow forwarding path on which a risk exists, to ensure service security.

Optionally, the next-hop device of the security device is a network device. Optionally, the next-hop device of the security device is another security device.

It may be understood that when the next-hop device of the security device is another security device, for a processing process of the another security device, refer to the foregoing descriptions. Details are not described herein again. When the next-hop device of the security device is a network device, the network device is a network device that belongs to an intermediate node on the service flow forwarding path.

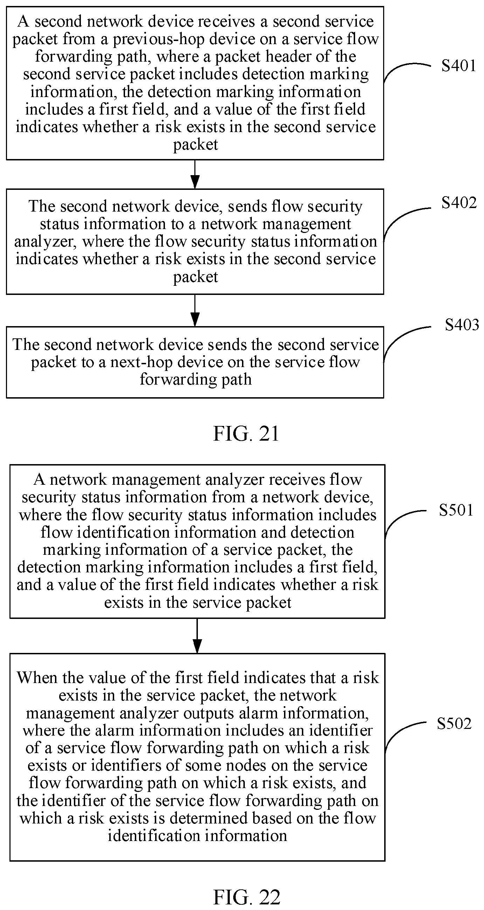

For ease of understanding, refer to FIG. 21. FIG. 21 is still another schematic flowchart of a packet detection method according to an embodiment of this application. The method shown in FIG. 21 can be applied to the service flow transmission system shown in FIG. 11, and is performed by a second network device. The second network device is a network device that belongs to an intermediate node on a service flow forwarding path, for example, the network device R2 and the network device R3 in FIG. 12. As shown in FIG. 21, the packet detection method provided in this embodiment of this application further includes steps S401 to S403.

S401: The second network device receives a second service packet from a previous-hop device on the service flow forwarding path, where a packet header of the second service packet includes detection marking information, the detection marking information includes a first field, and a value of the first field indicates whether a risk exists in the second service packet.

Optionally, for the second network device that belongs to an intermediate node, the previous-hop device on the service flow forwarding path is another network device or a security device.

For example, when the second network device is the network device R2 in FIG. 12, the previous-hop device is the network device R1. When the second network device is the network device R3 in FIG. 12, the previous-hop device is the security device FW1.

It may be understood that, when the previous-hop device of the second network device is a first network device, the second service packet received by the second network device is a first service packet obtained by the first network device by encapsulation. When the previous-hop device of the second network device is a security device or a network device other than the first network device, the second service packet is a service packet obtained by forwarding and/or performing security detection on the first service packet.

In this embodiment of this application, the packet header of the second service packet received by the second network device includes the detection marking information. For example, an IFIT packet header of the second service packet received by the second network device includes the detection marking information. When the second service packet is an MPLS protocol packet, the IFIT packet header is located in an MPLS packet header of the second service packet. When the second service packet is an SRv6 protocol packet, the IFIT packet header is located in a segment routing header SRH of the second service packet.

In this embodiment of this application, the detection marking information includes the first field, and the value of the first field indicates whether a risk exists in the second service packet.

It may be understood that, when the first service packet obtained by the first network device by encapsulation includes a second field and a third field, the second service packet received by the second network device also includes the second field and the third field. For explanations of the second field and the third field, refer to the foregoing descriptions. Details are not described herein again.

When the previous-hop device of the second network device is the first network device, values of the first field, the second field, and the third field in the second service packet received by the second network device are the same as values of a first field, the second field, and the third field in the first service packet obtained by the first network device by encapsulation.

For example, if the value of the first field in the first service packet obtained by the first network device by encapsulation is set to a first value, the value of the first field in the second service packet received by the second network device is also the first value. If the value of the second field in the first service packet obtained by the first network device by encapsulation is set to a third value, the value of the second field in the second service packet received by the second network device is also the third value. If the value of the second field in the first service packet obtained by the first network device by encapsulation is set to a fifth value, the value of the second field in the second service packet received by the second network device is also the fifth value.

When the previous-hop device of the second network device is a security device or a network device other than the first network device, the values of the first field, the second field, and the third field in the second service packet received by the second network device may be different from the values of the first field, the second field, and the third field in the first service packet obtained by the first network device by encapsulation.

For example, if the second service packet received by the second network device is a service packet obtained by performing security detection by the previous-hop security device, the value of the second field in the second service packet received by the second network device is set to a fourth value. The fourth value indicates that security detection has been performed on the second service packet. In addition, if a risk exists in security detection, the value of the first field is set to a second value, and the second value indicates that a risk exists in the second service packet.

It may be understood that, if the second service packet received by the second network device is only obtained by forwarding, by a plurality of continuous hops of network devices, the first service packet obtained by the first network device by encapsulation, and security detection has not been performed on the second service packet, the values of the first field, the second field, and the third field in the second service packet are the same as the values of the first field, the second field, and the third field in the first service packet obtained by the first network device by encapsulation. S402: The second network device sends flow security status information to a network management analyzer, where the flow security status information indicates whether a risk exists in the second service packet.

To detect a service packet in which a risk exists in a service flow and a service flow forwarding path on which a risk exists, after receiving the second service packet, the second network device can send the flow security status information of the second service packet to the network management analyzer.

Correspondingly, the flow security status information of the second service packet indicates whether a risk exists in the second service packet. For the flow security status information of the second service packet, refer to the flow security status information of the first service packet. Details are not described herein again.

S403: The second network device sends the second service packet to a next-hop device on the service flow forwarding path.

When the second network device is an intermediate node on the service flow forwarding path, the second network device further needs to send the second service packet to the next-hop device, to forward the second service packet to a destination network node through the next-hop device. Optionally, the next-hop device of the second network device is another network device or a security device, and is specifically determined according to the service flow forwarding path. When the second network device is a tail node on the service flow forwarding path, the second network device sends the second service packet to the destination device.

In this embodiment of this application, after obtaining a service packet, each network device uploads flow security status information of the service packet to the network management analyzer. In this way, the network management analyzer can identify, based on the flow security status information, a service flow packet in which a risk exists and a service flow forwarding path on which a risk exists. The network devices include the first network device and the second network device.

To obtain a risk status of a service flow in a timely manner, in some embodiments of this application, each network device reports flow security status information to the network management analyzer in a telemetry manner.

By using a telemetry technology, each network device periodically reports the flow security status information of the service packet to the network management analyzer in a push mode (Push Mode). A collection period in the telemetry technology can reach a subsecond level. Therefore, each network device uploads the flow security status information to the network management analyzer by using the telemetry technology, so that the network management analyzer can detect, in a timely manner, a service packet in which a risk exists in a service flow and a service flow forwarding path on which a risk exists.

For example, the network management analyzer and the network device pre-subscribe to data information that needs to be collected, for example, the flow security status information in this embodiment of this application. Then, the network device uses the flow security status information in the service packet based on a subscription requirement, and then actively uploads the collected flow security status information to the network management analyzer after encoding.

In an example, the network device encodes the flow security status information in a GPB (Google protocol buffers) encoding format, and then uploads an encoding result to the network management analyzer. The GPB encoding format is a binary encoding format, and data collection efficiency can be improved by GPB encoding.

In an example, the network device uploads the encoded flow security status information to the network management analyzer in a Google remote procedure call (Google remote procedure call, gRPC) manner. In an example, the network device uploads the encoded flow security status information to the network management analyzer in a user datagram protocol (user datagram protocol, UDP) manner. In this way, corresponding uploading manners can be used for different service scenarios, to collect the flow security status information.

To reduce a transmission amount and reduce a transmission load, in this embodiment of this application, each network device uploads flow security status information of a service packet when a first field in the service packet indicates that a risk exists in the service packet. For example, after receiving the service packet, the network device identifies detection marking information of the service packet, and if a first field in the detection marking information indicates that a risk exists in the service packet, uploads the flow security status information of the service packet to the network management analyzer. If the first field in the detection marking information indicates that no risk exists in the service packet, the flow security status information of the service packet does not need to be uploaded to the network management analyzer.

To help the network management analyzer discover, in a timely manner, a service flow forwarding path on which a risk exists, in some embodiments of this application, the flow security status information further includes an identifier of the network device. In this way, after each network device sends the flow security status information to the network management analyzer, the network management analyzer can identify, based on the identifier of the network device, the flow identification information, and the detection marking information, a service flow forwarding path on which a risk exists and a path segment in the service flow forwarding path on which a risk exists.

For ease of understanding, refer to FIG. 22. FIG. 22 is still another schematic flowchart of a packet detection method according to an embodiment of this application. The method shown in FIG. 22 can be applied to the service flow transmission system shown in FIG. 11 and performed by a network management analyzer, for example, performed by the network management analyzer in FIG. 12. As shown in FIG. 22, the packet detection method provided in this embodiment of this application further includes steps S501 and S502.

S501: The network management analyzer receives flow security status information from a network device, where the flow security status information includes flow identification information and detection marking information of a service packet, the detection marking information includes a first field, and a value of the first field indicates whether a risk exists in the service packet.

The network management analyzer receives flow security status information sent by each network device, where the flow security status information includes flow identification information and detection marking information of a service packet.

The detection marking information includes a first field, and a value of the first field indicates whether a risk exists in the service packet. The detection marking information further includes a second field and a third field. The second field indicates whether security detection has been performed on the service packet, and the third field indicates a risk type of a risk when the risk exists in the service packet.

In this embodiment of this application, the flow security status information further includes an identifier of the network device, and each network device has a unique identifier.

S502: When the value of the first field indicates that a risk exists in the service packet, the network management analyzer outputs alarm information, where the alarm information includes an identifier of a service flow forwarding path on which a risk exists or identifiers of some nodes on the service flow forwarding path on which a risk exists, and the identifier of the service flow forwarding path on which a risk exists is determined based on the flow identification information. The alarm information includes the identifier of the service flow forwarding path on which a risk exists or identifiers of some nodes on the service flow forwarding path on which a risk exists.

In this embodiment of this application, the identifier of the service flow forwarding path on which a risk exists is determined based on the flow identification information. For example, the network management analyzer stores a network topology diagram. For each service flow forwarding path in a network topology, the network management analyzer stores flow identification information of a service flow transmitted on the service flow forwarding path. That is, the network management analyzer stores a mapping relationship between an identifier of each service flow forwarding path and flow identification information of a corresponding service flow. Therefore, after the network management analyzer receives flow security status information, if a value of a first field in detection marking information in the flow security status information indicates that a risk exists in the service packet, the network management analyzer obtains, according to the mapping relationship, an identifier of a service flow forwarding path corresponding to flow identification information in the flow security status information. After the identifier of the service flow forwarding path corresponding to the flow identification information in the flow security status information is obtained, it is determined that a risk exists in the service flow forwarding path corresponding to the flow identification information in the flow security status information, an alarm prompt is performed, and an identifier of the service flow forwarding path corresponding to the flow identification information in the flow security status information is output.

In some embodiments of this application, the flow security status information uploaded by the network device to the network management analyzer includes an identifier of the network device. In this way, after the network management analyzer receives the flow security status information from the network device, if the value of the first field in the detection marking information in the flow security status information indicates that a risk exists in the service packet, the network management analyzer performs an alarm prompt based on the identifier of the network device, and outputs the identifier of the network device.

In some embodiments of this application, the network management analyzer also stores an identifier of each node in the network topology diagram. After the network management analyzer receives the flow security status information from the network device, if the value of the first field in the detection marking information in the flow security status information indicates that a risk exists in the service packets, the network management analyzer obtains, based on the mapping relationship and the flow identification information in the flow security status information, a service flow forwarding path on which a risk exists, and then matches the identifier of the network device uploading the flow security status information with an identifier of a node on the service flow forwarding path, to obtain a risk road segment on the service flow forwarding path. Then, an alarm prompt is performed based on the risk road segment, and an identifier of a node on the risk road segment is output.

In some embodiments of this application, the flow security status information uploaded by the network device to the network management analyzer further includes in-situ flow information telemetry data. After receiving the in-situ flow information telemetry data, the network management analyzer obtains a packet loss status and a delay status of a service flow based on the in-situ flow information telemetry data.

In some embodiments of this application, when the value of the first field in the detection marking information in the flow security status information indicates that a risk exists in the service packet, after determining the risk road segment, the network management analyzer determines that a service packet discarded on the risk road segment is discarded due to the risk, and then outputs a packet loss prompt. The packet loss prompt includes a description of discarding the discarded service packet.

In embodiments of this application, the detection marking information is set in the service packet, and a risk is indicated in the service packet based on the detection marking information. In this way, after receiving the flow security status information, the network management analyzer can identify, based on the detection marking information in the flow security status information, a service flow forwarding path on which a risk exists, to ensure service security.

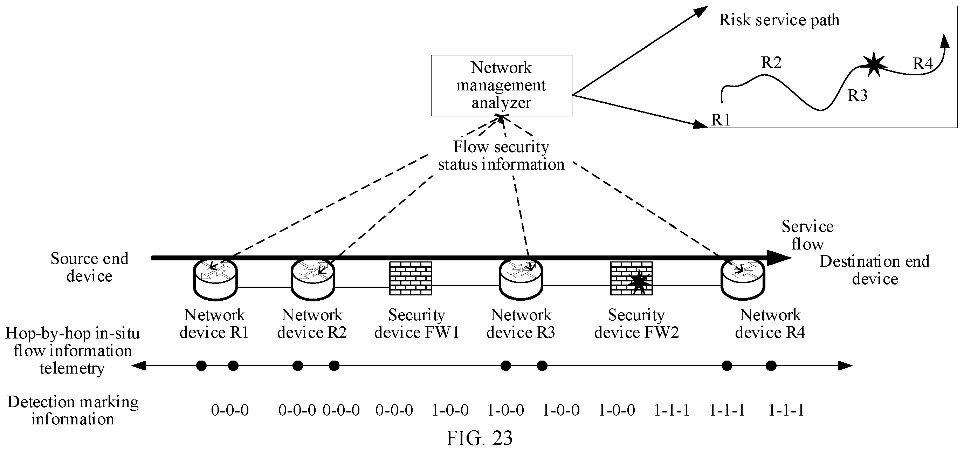

The following uses the service flow forwarding path shown in FIG. 12 and the detection marking information including the first field, the second field, and the third field as an example to describe the packet detection method provided in embodiments of this application with reference to the detection marking information shown in Table 1. As shown in FIG. 23, hop-by-hop in-situ flow information telemetry is deployed for each network device.

First, the network device R1 encapsulates to-be-transmitted service flow data, to obtain a service packet. In this case, in detection marking information in the service packet, a first field is 0, a second field is 0, and a third field is 0. The detection marking information in the service packet is represented as 0-0-0 (a value of the second field, a value of the first field, and a value of the third field in sequence). The network device R1 sends flow security status information to the network management analyzer, and sends the service packet to the network device R2. In this case, detection marking information in the flow security status information received by the network management analyzer is 0-0-0, and the network management analyzer does not perform processing. The network device R2 forwards the service packet to the security device FW1 and sends flow security status information to the network management analyzer. In this case, detection marking information in the flow security status information received by the network management analyzer is still 0-0-0, and the network management analyzer does not perform processing. Correspondingly, the detection marking information in the service packet forwarded to the security device FW1 is also 0-0-0.

After receiving the service packet, the security device FW1 performs security detection on the service packet, and if no risk is detected, sets the second field in the detection marking information in the service packet to 1. In this case, obtained detection marking information in the service packet is 1-0-0. The security device FW1 sends a service packet whose detection marking information is 1-0-0 to the network device R3.

After receiving the service packet sent by the security device FW1, the network device R3 sends flow security status information to the network management analyzer, and forwards the received service packet to the security device FW2. In this case, detection marking information in the flow security status information received by the network management analyzer is 1-0-0, and the network management analyzer does not perform processing. Correspondingly, the detection marking information in the service packet forwarded to the security device FW2 is also 1-0-0. After receiving the service packet forwarded by the network device R3, the security device FW2 performs security detection on the service packet, and detects that a risk of file-type filtering exists in the service packet. The security device FW2 sets both the first field and the third field in the detection marking information in the service packet to 1. In this case, obtained detection marking information in the service packet is 1-1-1.

After detecting that a risk of file-type filtering exists in the service packet, the security device FW2 blocks the service packet, and sets both a first field and a third field to 1 in detection marking information in a service packet that has same flow identification information but in which a malicious feature is not detected.

The security device FW2 sends a service packet whose detection marking information is 1-1-1 to the network device R4.

After receiving the service packet sent by the security device FW2, the network device R4 sends flow security status information to the network management analyzer. In this case, detection marking information in the flow security status information received by the network management analyzer is 1-1-1, and the network management analyzer marks a risk on the service flow forwarding path or marks a risk on a path segment from the network device R3 to the network device R4, and outputs alarm information to prompt that security detection is abnormal. The alarm information includes an identifier of the service flow forwarding path, or identifiers of the network device R3 and the network device R4.

According to the device detection method provided in this embodiment of this application, detection marking information is set in a packet, and a risk is indicated in the packet based on the detection marking information, to assist a management and analysis layer in identifying a risk packet and/or a risk path in a service flow.

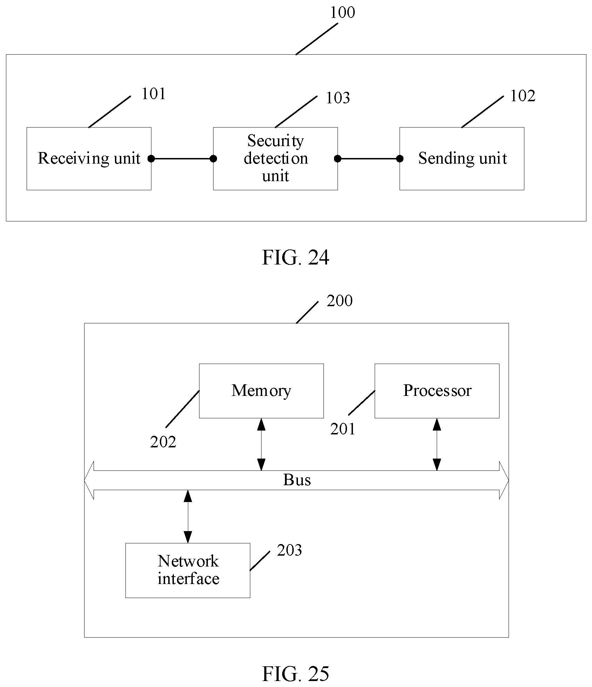

Based on a same inventive concept, an embodiment of this application further provides a security device. FIG. 24 is a diagram of a structure of a security device 100 according to an embodiment of this application. The security device 100 shown in FIG. 24 is, for example, the security device in the embodiments corresponding to FIG. 18, FIG. 19, and FIG. 20, or the security device FW1 and the security device FW2 in FIG. 12.

As shown in FIG. 24, the security device 100 includes a receiving unit 101 and a sending unit 102. The receiving unit 101 is configured to receive a first service packet from a previous-hop device on a service flow forwarding path, where a packet header of the first service packet includes detection marking information, the detection marking information includes a first field, and the first field indicates whether a risk exists in the first service packet. The sending unit 102 is configured to send a second service packet to a next-hop device on the service flow forwarding path, where the second service packet is the same as the first service packet, or the second service packet is obtained by updating a value of the first field in the first service packet.

Optionally, if the value of the first field in the first service packet is a second value, and the second value indicates that a risk exists in the first service packet, the sending unit 102 is configured to send the second service packet to the next-hop device on the service flow forwarding path, where the first service packet is the same as the second service packet.

Optionally, the security device 100 further includes a security detection unit 103. If the value of the first field in the first service packet is a first value, and the first value indicates that no risk exists in the first service packet, before the second service packet is sent to the next-hop device on the service flow forwarding path, the security detection unit 103 is configured to perform, by the security device, security detection on the first service packet.

The sending unit 102 is configured to: in response to a security detection result of the first service packet by the security device indicating that no risk exists in the first service packet, send the second service packet to the next-hop device on the service flow forwarding path, where the first service packet is the same as the second service packet; and in response to the security detection result of the first service packet by the security device indicating that a risk exists in the first service packet, send the second service packet to the next-hop device on the service flow forwarding path, where the second service packet is obtained by updating the value of the first field in the first service packet to a second value, and the second value indicates that a risk exists in the second service packet.

Optionally, the detection marking information in the first service packet further includes a second field, a value of the second field indicates whether security detection has been performed on the first service packet. The security detection unit 103 is configured to: in response to the value of the second field in the detection marking information in the first service packet being a third value, and the third value indicating that security detection has not been performed on the first service packet, perform, by the security device, security detection on the first service packet.

Before the second service packet is sent to the next-hop device on the service flow forwarding path, the security detection unit 103 is further configured to update the value of the second field in the first service packet to a fourth value, to obtain the second service packet, where the fourth value indicates that security detection has been performed on the first service packet.

Optionally, before performing security detection on the first service packet, the security detection unit 103 is further configured to:
in response to the value of the second field in the detection marking information in the first service packet being the fourth value, skip, by the security detection unit 103, performing the step of performing security detection on the first service packet.

Optionally, the security detection unit 103 is configured to: determine whether the flow identification information of the first service packet is the same as the flow identification information of the third service packet in which a risk is detected; in response to the flow identification information of the first service packet being the same as the flow identification information of the third service packet in which a risk is detected, determine that the security detection result of the first service packet indicates that a risk exists in the first service packet; in response to the flow identification information of the first service packet being different from the flow identification information of the third service packet in which a risk is detected, determine whether the first service packet includes a malicious feature in a malicious feature library; in response to the flow identification information of the first service packet being different from the flow identification information of the third service packet in which the security device detects a risk, and the first service packet including no malicious feature in the malicious feature library, determine that the security detection result of the first service packet indicates that no risk exists in the first service packet; and in response to the flow identification information of the first service packet being different from the flow identification information of the third service packet in which the security device detects a risk, and the first service packet including a malicious feature in the malicious feature library, determine that the security detection result of the first service packet indicates that a risk exists in the first service packet.

Optionally, the flow identification information includes one or more of the following: address information of a source end, address information of a destination end, a port number of the source end, a port number of the destination end, and a protocol type.

Optionally, the detection marking information further includes a third field, and a value of the third field indicates a risk type of a risk when the risk exists in the first service packet.

Optionally, the risk type includes one or more of the following: a file-type risk, a protocol-type risk, and a world wide web WEB-type risk.

Optionally, in the detection marking information, the first field occupies 1 bit, the second field occupies 1 bit, and the third field occupies 3 bits.

Optionally, the first service packet includes an in-situ flow information telemetry IFIT packet header, and the detection marking information is located in the IFIT packet header.

Optionally, the first service packet is an SRv6 protocol packet, and the IFIT packet header is located in a segment routing header SRH of the first service packet; or the first service packet is an MPLS protocol packet, and the IFIT packet header is located in the MPLS packet header of the first service packet.

FIG. 25 is a diagram of a structure of a security device according to an embodiment of this application. The security device 100 shown in FIG. 25 is, for example, the security device in the embodiments corresponding to FIG. 18, FIG. 19, and FIG. 20, or the security device FW1 and the security device FW2 in FIG. 12.

As shown in FIG. 25, the security device 200 includes a processor 201, a memory 202, and a network interface 203. The processor 201, the memory 202, and the network interface 203 are connected through a double rate (double data rate, DDR) bus or a bus of another type. The network interface 203 is configured to communicate with another device, for example, receive, through the network interface 203, a service packet sent by a network device or another security device, or send a service packet to a network device or another security device through the network interface. The processor 201 may be a central processing unit (central processing unit, CPU), or may be another specific integrated circuit. The processor 201 may alternatively be another general-purpose processor, a digital signal processor (digital signal processor, DSP), an application-specific integrated circuit ASIC, a field programmable gate array (field programmable gate array, FPGA) or another programmable logic device, a discrete gate or transistor logic device, a discrete hardware component, or the like. In actual application, the security device may also include a plurality of processors, and the processor may include one or more processor cores (core).

The memory 202 is usually configured to store computer program executable program code. The executable program code includes instructions, and the processor 201 runs the instructions stored in the memory, to perform various function applications of the security device 200 and data processing. The memory 202 includes a program storage area and a data storage area. The program storage area may store an operating system, an application required by at least one function, and the like. The data storage area may store data created in a process of using the security device 200, and the like.

In addition, the memory 202 may include a high-speed random access memory, and may further include a non-volatile memory, for example, at least one magnetic disk storage device, a flash storage device, or a universal flash storage (universal flash storage, UFS).

It may be understood that the structure shown in FIG. 25 in this application does not constitute a specific limitation on the security device 200. In some other embodiments of this application, the security device 200 may include more or fewer components than those shown in the figure, or some components may be combined, or some components may be split, or different component arrangements may be used. The components shown in the figure may be implemented by hardware, software, or a combination of software and hardware.

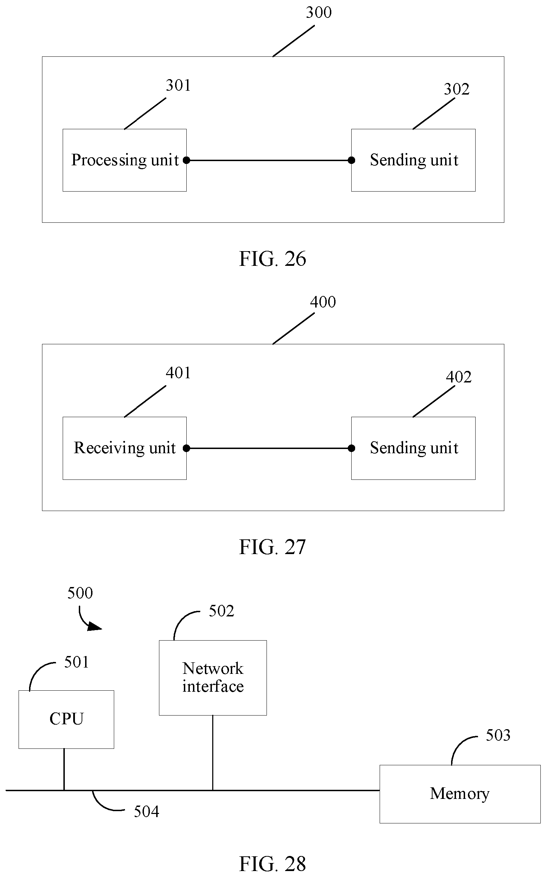

FIG. 26 is a diagram of a structure of a network device 300 according to an embodiment of this application. The network device 300 shown in FIG. 26 is, for example, the first network device in the embodiment corresponding to FIG. 14, or the network device R1 in FIG. 12.

As shown in FIG. 26, the network device 300 includes a processing unit 301 and a sending unit 302. The processing unit 301 is configured to encapsulate to-be-transmitted service flow data, to obtain a first service packet, where a packet header of the first service packet includes detection marking information, the detection marking information includes a first field, a value of the first field is set to a first value, and the first value indicates that no risk exists in the first service packet. The sending unit 302 is configured to send the first service packet to a next-hop device on a service flow forwarding path. Optionally, the detection marking information further includes a second field, a value of the second field is set to a third value, and the third value indicates that security detection has not been performed on the first service packet.

Optionally, the detection marking information further includes a third field, a value of the third field is set to a fifth value, and the fifth value indicates that a risk type of the first service packet is to be set.

Optionally, the risk type includes one or more of the following: a file-type risk, a protocol-type risk, and a world wide web WEB-type risk.

Optionally, in the detection marking information, the first field occupies 1 bit, the second field occupies 1 bit, and the third field occupies 3 bits.

Optionally, the first service packet includes an in-situ flow information telemetry IFIT packet header, and the detection marking information is located in the IFIT packet header.

Optionally, the first service packet is an SRv6 protocol packet, and the IFIT packet header is located in a segment routing header SRH of the first service packet; or the first service packet is an MPLS protocol packet, and the IFIT packet header is located in the MPLS packet header of the first service packet.

Optionally, the sending unit 302 is further configured to send flow security status information to a network management analyzer, where the flow security status information indicates whether a risk exists in the first service packet.

Optionally, the flow security status information includes flow identification information and the detection marking information of the first service packet.

FIG. 27 is a diagram of a structure of a network device 400 according to an embodiment of this application. The network device 400 shown in FIG. 27 is, for example, the second network device in the embodiment corresponding to FIG. 21, or the network device R2, the network device R3, or the network device R4 in FIG. 12.

As shown in FIG. 27, the network device 400 includes a receiving unit 401 and a sending unit 402. The receiving unit 401 is configured to receive a second service packet from a previous-hop device on a service flow forwarding path, where a packet header of the second service packet includes detection marking information, the detection marking information includes a first field, and a value of the first field indicates whether a risk exists in the second service packet. The sending unit 402 is configured to send flow security status information to a network management analyzer, where the flow security status information indicates whether a risk exists in the second service packet. Optionally, the detection marking information further includes a second field, and a value of the second field indicates whether security detection has been performed on the second service packet. Optionally, the detection marking information further includes a third field, and a value of the third field indicates a risk type of a risk when the risk exists in the second service packet.

Optionally, the risk type includes one or more of the following: a file-type risk, a protocol-type risk, and a world wide web WEB-type risk.

Optionally, in the detection marking information, the first field occupies 1 bit, the second field occupies 1 bit, and the third field occupies 3 bits. In this way, the service packet carries the detection marking information, so that a risk service flow forwarding path is identified. Optionally, the second service packet includes an in-situ flow information telemetry IFIT packet header, and the detection marking information is located in the IFIT packet header.

Optionally, the second service packet is an SRv6 protocol packet, and the IFIT packet header is located in a segment routing header SRH of the second service packet; or the second service packet is an MPLS protocol packet, and the IFIT packet header is located in the MPLS packet header of the second service packet.

Optionally, the flow security status information includes flow identification information and the detection marking information of the second service packet.

Optionally, the sending unit 402 is further configured to: in response to the second network device being an intermediate node on the service flow forwarding path, send the second service packet to a next-hop device on the service flow forwarding path.

FIG. 28 is a diagram of a structure of a network device 500 according to an embodiment of this application. The network device 500 shown in FIG. 28 can be configured to perform steps performed by any one of the first network device and the second network device in the foregoing embodiments. Although the network device 500 shown in FIG. 28 shows some specific features, a person skilled in the art may be aware from embodiments of this application that, for brevity, FIG. 28 does not show other features, to avoid confusing more related aspects of the implementations disclosed in embodiments of this application. For this purpose, in an example, in some implementations, the network device 500 includes one or more processors (for example, CPUs) 501, a network interface 502, a memory 503, and one or more communication buses 504 configured to interconnect various components. In some other implementations, some functional components or units may be omitted or added to the network device 500 based on the foregoing example.

In some implementations, the network interface 502 is configured to connect to another network device/security device. In some implementations, the communication bus 505 includes a circuit that interconnects system components and controls communication between the system components. The memory 503 can include a non-volatile memory, or can include a volatile memory.

In some implementations, a non-transitory computer-readable storage medium of the memory 503 stores the following programs, modules, and data structures, or a subset thereof, for example, includes a processing unit (not shown in the figure), a sending unit (not shown in the figure), and a receiving unit (not shown in the figure).

In a possible embodiment, the network device 500 has any function of the network device in the method embodiments corresponding to FIG. 14 and FIG. 21.

It should be understood that, in this application, the network interface 502 on the network device 500 can complete a data receiving and sending operation, or the processor 501 can invoke program code in the memory, and cooperate with the network interface 502 to implement a data receiving and sending operation when required.

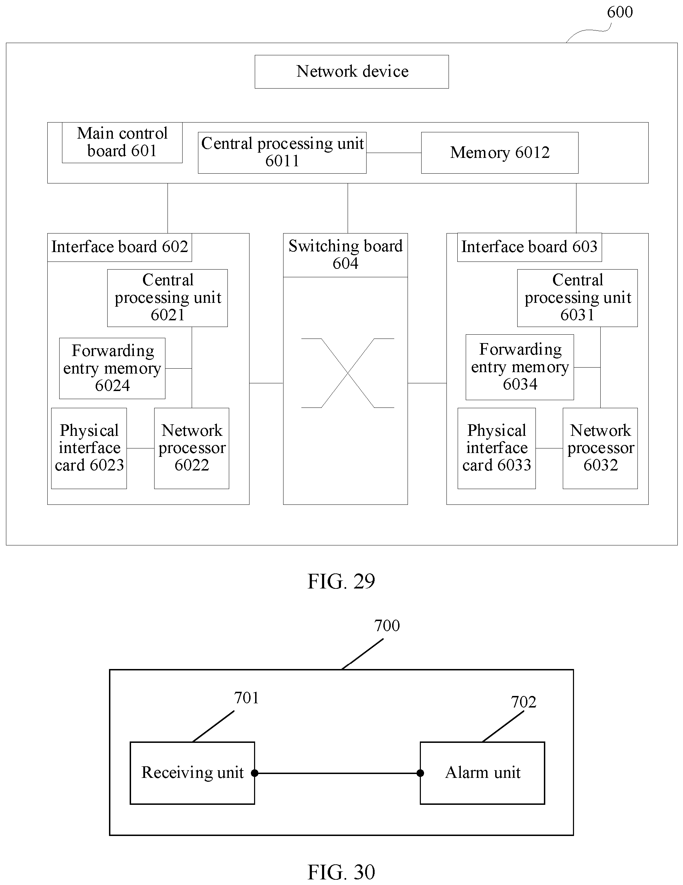

Optionally, a specific structure of the network device in FIG. 28 in this application is shown in FIG. 29.

FIG. 29 is a diagram of a structure of a network device 600 according to an embodiment of this application. The network device 600 shown in FIG. 29 can be configured to perform steps performed by any one of the first network device and the second network device in the foregoing embodiments. The network device 600 includes: a main control board 601 and an interface board 602.

The main control board 601 is also referred to as a main processing unit (main processing unit, MPU) or a route processor (route processor). The main control board 601 is configured to control and manage each component in the network device 600, including functions of route calculation, device management, device maintenance, and protocol processing. The main control board 601 includes a central processing unit 6011 and a memory 6012.

The interface board 602 is also referred to as a line processing unit (line processing unit, LPU), a line card (line card), or a service board. The interface board 602 is configured to: provide various service interfaces, and forward a data packet. The service interface includes but is not limited to an Ethernet interface and a POS (Packet over SONET/SDH) interface. The interface board 602 includes a central processing unit 6021, a network processor 6022, a physical interface card (physical interface card, PIC) 6023, and a forwarding entry memory 6024.

The central processing unit 6021 on the interface board 602 is configured to: control and manage the interface board 602, and communicate with the central processing unit 6011 on the main control board 601.

The network processor 6022 is configured to forward a packet. A form of the network processor 6022 can be a forwarding chip.

The physical interface card 6023 is configured to implement a physical layer interconnection function. Original traffic enters the interface board 602 from the physical interface card 6023, and a processed packet is sent out from the physical interface card 6023. The physical interface card 6023 includes at least one physical interface. The physical interface is also referred to as a physical port, and the physical interface may be a flexible Ethernet (Flexible Ethernet, FlexE) physical interface. In some embodiments, the central processing unit 6021 on the interface board 602 may also perform a function of the network processor 6022, for example, implement software forwarding based on a general-purpose CPU, so that the network processor 6022 is not required in the interface board 602.

Optionally, the network device 600 includes a plurality of interface boards. For example, the network device 600 further includes an interface board 603, and the interface board 603 includes a central processing unit 6031, a network processor 6032, a physical interface card 6033, and a forwarding entry memory 6034.

Optionally, the network device 600 further includes a switching board 604. The switching board 604 may also be referred to as a switch fabric unit (switch fabric unit, SFU). When the network device has a plurality of interface boards 602, the switching board 604 is configured to complete data exchange between the interface boards. For example, the interface board 602 and the interface board 603 can communicate with each other through the switching board 604.

The main control board 601 is coupled to the interface board. For example, the main control board 601, the interface board 602, the interface board 603, and the switching board 604 are connected to each other through a system bus and/or a system backplane to implement interworking. In a possible implementation, an inter-process communication (inter-process communication, IPC) channel is established between the main control board 601 and the interface board 602, and the main control board 601 communicates with the interface board 602 through the IPC channel. Logically, the network device 600 includes a control plane and a forwarding plane. The control plane includes the main control board 601 and the central processing unit 6021. The forwarding plane includes components that perform forwarding, such as the forwarding entry memory 6024, the physical interface card 6023, and the network processor 6022. The control plane performs functions such as route advertising, generating a forwarding table, processing signaling and protocol packets, and configuring and maintaining a status of a device. The control plane delivers the generated forwarding table to the forwarding plane. On the forwarding plane, the network processor 6022 looks up the table and forwards a packet received by the physical interface card 6023 based on the forwarding table delivered by the control plane. The forwarding table delivered by the control plane can be stored in the forwarding entry memory 6024. In some embodiments, the control plane and the forwarding plane can be completely separate and not on a same device. It should be understood that, in this embodiment of this application, an operation performed on the interface board 603 is consistent with an operation performed on the interface board 602. For brevity, details are not described again. It should be understood that the network device 600 in this embodiment may correspond to the first network device in the foregoing method embodiments. The main control board 601, and the interface board 602, and/or the interface board 603 in the network device 600 can implement functions and/or various steps implemented by the first network device in the foregoing method embodiments. For brevity, details are not described herein again.

It should be noted that there may be one or more main control boards, and when there are a plurality of main control boards, a primary main control board and a secondary main control board can be included. There may be one or more interface boards. A network device with a stronger data processing capability provides a larger quantity of interface boards. There may also be one or more physical interface cards on the interface board. There may be no switching board or one or more switching boards. When there are a plurality of switching boards, load balancing and redundancy backup can be implemented together. In a centralized forwarding architecture, the network device can require no switching board, and the interface board provides a function of processing service data of an entire system. In a distributed forwarding architecture, the network device can have at least one switching board, and data exchange between a plurality of interface boards is implemented via the switching board, to provide a large-capacity data exchange and processing capability. Optionally, the network device may also be in a form in which there is only one card. In other words, there is no switching board, and functions of the interface board and the main control board are integrated on the card. In this case, a central processing unit on the interface board and a central processing unit on the main control board may be combined into one central processing unit on the card, to perform a function obtained by combining the two central processing units. An architecture is specifically used depends on a specific networking deployment scenario. This is not uniquely limited herein.

It should be understood that the network devices in the foregoing product forms separately have any function of the first network device or the second network device in the foregoing method embodiments, and details are not described herein again.

FIG. 30 is a diagram of a structure of a network management analyzer 700 according to an embodiment of this application. The network management analyzer 700 shown in FIG. 30 is, for example, the first network device in the embodiment corresponding to FIG. 22, or the network management analyzer in FIG. 12.

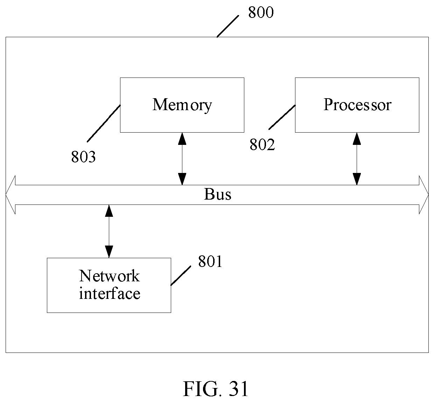

As shown in FIG. 30, the network management analyzer 700 includes a receiving unit 701 and an alarm unit 702. The receiving unit 701 is configured to receive flow security status information from a network device, where the flow security status information includes flow identification information and detection marking information of a service packet, the detection marking information includes a first field, and a value of the first field indicates whether a risk exists in the service packet. The alarm unit 702 is configured to: when the value of the first field indicates that a risk exists in the service packet, output alarm information, where the alarm information includes an identifier of a service flow forwarding path on which a risk exists or identifiers of some nodes on the service flow forwarding path on which a risk exists, and the identifier of the service flow forwarding path on which a risk exists is determined based on the flow identification information. FIG. 31 is a diagram of a structure of a network management analyzer 800 according to an embodiment of this application. The network management analyzer 800 shown in FIG. 31 is, for example, the first network device in the embodiment corresponding to FIG. 22, or the network management analyzer in FIG. 12.

As shown in FIG. 31, the network management analyzer 800 includes a network interface 801, a processor 802, and a memory 803.

The network interface 801 is configured to communicate with another device. For example, flow security status information uploaded by a network device can be received through the network interface 801.

The memory 803 is usually configured to store computer program executable program code. The executable program code includes instructions, and the processor 802 runs the instructions stored in the memory, to perform various function applications of the network management analyzer 800 and data processing. The memory 803 can include a program storage area and a data storage area. The program storage area may store an operating system, an application program required by at least one function, and the like. The data storage area may store data created in a process of using the network management analyzer 800, and the like.

It can be understood that the structure listed in this application does not constitute a specific limitation on the network management analyzer 800. In some other embodiments of this application, the network management analyzer 800 may include more or fewer components than those shown in the figure, or some components may be combined, or some components may be split, or different component arrangements may be used. The components shown in the figure may be implemented by hardware, software, or a combination of software and hardware.

In addition, an embodiment of this application further provides an electronic device. The electronic device includes a memory and a processor that communicates with the memory. The memory includes computer-readable instructions. The processor is configured to execute the computer-readable instructions, so that the electronic device performs the method performed by the security device, the network device, or the network management analyzer side in the foregoing embodiments.

In addition, an embodiment of this application further provides a service flow transmission system, including one or more security devices, one or more network devices, and a network management analyzer. The security device, the network device, and the network management analyzer are configured to perform the method in the foregoing embodiments.

An embodiment of this application further provides a computer-readable storage medium. The computer-readable storage medium stores computer program instructions. When the computer program instructions are executed by a processing circuit, functions or steps in the foregoing packet detection method are implemented.

In addition, an embodiment of this application may further provide a chip system. The chip system includes a processing circuit and a storage medium. The storage medium stores computer program instructions. When the computer program instructions are executed by the processing circuit, functions or steps in the foregoing packet detection method are implemented.

In addition, an embodiment of this application may further provide a computer program product including instructions. When the computer program product runs on a computer, the computer is enabled to perform functions or steps in the foregoing packet detection method.

Based on the descriptions of the foregoing implementations, a person skilled in the art can clearly understand that, for the purpose of convenient and brief description, for a detailed working process of the foregoing chip system, electronic device, computer-readable storage medium, computer program product including instructions, and service flow transmission system, refer to a corresponding process in the foregoing method embodiments. Details are not described herein again.

It may be understood that the method or algorithm steps described in combination with embodiments of this application may be implemented by hardware, or may be implemented by a processor by executing software instructions. The software instructions may include a corresponding software module. The software module may be stored in a random access memory, a flash memory, an erasable programmable read-only memory, an electrically erasable programmable read-only memory, a register, a hard disk drive, a removable hard disk drive, a compact disc read-only memory, or a storage medium in any other forms. For example, the storage medium is coupled to the processor, so that the processor can read information from the storage medium and write information to the storage medium. Certainly, the storage medium may be a component of the processor. The processor and the storage medium may be located in an application-specific integrated circuit (Application Specific Integrated Circuit, ASIC). In addition, the ASIC may be located in an electronic device. Certainly, the processor and the storage medium may alternatively exist in the electronic device as discrete components.

In another optional manner, when software is used to implement the embodiments, all or a part of the embodiments may be implemented in a form of a computer program product. The computer program product includes one or more computer instructions. When the computer program instructions are loaded and executed on a computer, the procedures or functions according to embodiments of this application are completely or partially implemented. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired manner (for example, a coaxial cable, an optical fiber, or a digital subscriber line (digital subscriber line, DSL)) or a wireless manner (for example, infrared, radio, and microwave, or the like). The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a digital video disk (digital video disk, DVD)), a semiconductor medium (for example, a solid-state drive solid state disk (SSD)), or the like. The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. A packet detection method, wherein the method comprises:
receiving, by a security device, a first service packet from a previous-hop device on a service flow forwarding path, wherein a packet header of the first service packet comprises detection marking information, the detection marking information comprises a first field, and a value of the first field indicates whether a risk exists in the first service packet; and
sending, by the security device, a second service packet to a next-hop device on the service flow forwarding path, wherein the second service packet is the same as the first service packet, or the second service packet is obtained by updating the value of the first field in the first service packet.

2. The packet detection method according to claim 1, wherein if the value of the first field in the first service packet is a second value, and the second value indicates that a risk exists in the first service packet, sending, by the security device, the second service packet to the next-hop device on the service flow forwarding path comprises:
sending, by the security device, the second service packet to the next-hop device on the service flow forwarding path, wherein the first service packet is the same as the second service packet.

3. The packet detection method according to claim 1, wherein if the value of the first field in the first service packet is a first value, and the first value indicates that no risk exists in the first service packet, before sending, by the security device, the second service packet to the next-hop device on the service flow forwarding path, the method further comprises:
performing, by the security device, security detection on the first service packet; and
sending, by the security device, the second service packet to the next-hop device on the service flow forwarding path comprises:
in response to a security detection result of the first service packet by the security device indicating that no risk exists in the first service packet, sending, by the security device, the second service packet to the next-hop device on the service flow forwarding path, wherein the first service packet is the same as the second service packet; and
in response to the security detection result of the first service packet by the security device indicating that a risk exists in the first service packet, sending, by the security device, the second service packet to the next-hop device on the service flow forwarding path, wherein the second service packet is obtained by updating the value of the first field in the first service packet to a second value, and the second value indicates that a risk exists in the second service packet.

4. The packet detection method according to claim 3, wherein the detection marking information in the first service packet further comprises a second field, and a value of the second field indicates whether security detection has been performed on the first service packet;
performing, by the security device, security detection on the first service packet comprises:
in response to the value of the second field in the detection marking information in the first service packet being a third value, and the third value indicating that security detection has not been performed on the first service packet, performing, by the security device, security detection on the first service packet; and
before sending, by the security device, the second service packet to the next-hop device on the service flow forwarding path, the method further comprises:
updating the value of the second field in the first service packet to a fourth value, to obtain the second service packet, wherein the fourth value indicates that security detection has been performed on the first service packet.

5. The packet detection method according to claim 4, wherein before performing, by the security device, security detection on the first service packet, the method further comprises:
in response to the value of the second field in the detection marking information in the first service packet being the fourth value, skipping, by the security device, performing the step of performing security detection on the first service packet.

6. The packet detection method according to any one of claims 2 to 5, wherein performing, by the security device, security detection on the first service packet comprises:
determining, by the security device, whether flow identification information of the first service packet is the same as flow identification information of a third service packet in which the security device detects a risk;
in response to the flow identification information of the first service packet being the same as the flow identification information of the third service packet in which the security device detects a risk, determining, by the security device, that the security detection result of the first service packet indicates that a risk exists in the first service packet;
in response to the flow identification information of the first service packet being different from the flow identification information of the third service packet in which the security device detects a risk, determining, by the security device, whether the first service packet comprises a malicious feature in a malicious feature library;
in response to the flow identification information of the first service packet being different from the flow identification information of the third service packet in which the security device detects a risk, and the first service packet comprising no malicious feature in the malicious feature library, determining that the security detection result of the first service packet indicates that no risk exists in the first service packet; and
in response to the flow identification information of the first service packet being different from the flow identification information of the third service packet in which the security device detects a risk, and the first service packet comprising a malicious feature in the malicious feature library, determining that the security detection result of the first service packet indicates that a risk exists in the first service packet.

7. The packet detection method according to claim 6, wherein the flow identification information comprises one or more of the following: address information of a source end, address information of a destination end, a port number of the source end, a port number of the destination end, and a protocol type.

8. The packet detection method according to any one of claims 1 to 7, wherein the detection marking information further comprises a third field, and a value of the third field indicates a risk type of a risk when the risk exists in the first service packet.

9. The packet detection method according to claim 8, wherein the risk type comprises one or more of the following: a file-type risk, a protocol-type risk, and a world wide web WEB-type risk.

10. The packet detection method according to claim 8 or 9, wherein in the detection marking information, the first field occupies 1 bit, the second field occupies 1 bit, and the third field occupies 3 bits.

11. The packet detection method according to any one of claims 1 to 10, wherein the first service packet comprises an in-situ flow information telemetry IFIT packet header, and the detection marking information is located in the IFIT packet header.

12. The packet detection method according to claim 11, wherein the first service packet is an SRv6 protocol packet, and the IFIT packet header is located in a segment routing header SRH of the first service packet; or
the first service packet is an MPLS protocol packet, and the IFIT packet header is located in an MPLS packet header of the first service packet.

13. A packet detection method, wherein the method comprises:
encapsulating, by a first network device, to-be-transmitted service flow data, to obtain a first service packet, wherein a packet header of the first service packet comprises detection marking information, the detection marking information comprises a first field, a value of the first field is set to a first value, and the first value indicates that no risk exists in the first service packet; and
sending, by the first network device, the first service packet to a next-hop device on a service flow forwarding path.

14. The packet detection method according to claim 13, wherein the detection marking information further comprises a second field, a value of the second field is set to a third value, and the third value indicates that security detection has not been performed on the first service packet.

15. The packet detection method according to claim 13 or 14, wherein the detection marking information further comprises a third field, a value of the third field is set to a fifth value, and the fifth value indicates that a risk type of the first service packet is to be set.

16. The packet detection method according to claim 15, wherein the risk type comprises one or more of the following: a file-type risk, a protocol-type risk, and a world wide web WEB-type risk.

17. The packet detection method according to any one of claims 13 to 16, wherein in the detection marking information, the first field occupies 1 bit, the second field occupies 1 bit, and the third field occupies 3 bits.

18. The packet detection method according to any one of claims 13 to 17, wherein the first service packet comprises an in-situ flow information telemetry IFIT packet header, and the detection marking information is located in the IFIT packet header.

19. The packet detection method according to claim 18, wherein the first service packet is an SRv6 protocol packet, and the IFIT packet header is located in a segment routing header SRH of the first service packet; or
the first service packet is an MPLS protocol packet, and the IFIT packet header is located in an MPLS packet header of the first service packet.

20. The packet detection method according to any one of claims 13 to 19, wherein the method further comprises:
sending, by the first network device, flow security status information to a network management analyzer, wherein the flow security status information indicates whether a risk exists in the first service packet.

21. The packet detection method according to claim 20, wherein the flow security status information comprises flow identification information and the detection marking information of the first service packet.

22. A packet detection method, wherein the method comprises:
receiving, by a second network device, a second service packet from a previous-hop device on a service flow forwarding path, wherein a packet header of the second service packet comprises detection marking information, the detection marking information comprises a first field, and a value of the first field indicates whether a risk exists in the second service packet; and
sending, by the second network device, flow security status information to a network management analyzer, wherein the flow security status information indicates whether a risk exists in the second service packet.

23. The packet detection method according to claim 22, wherein the detection marking information further comprises a second field, and a value of the second field indicates whether security detection has been performed on the second service packet.

24. The packet detection method according to claim 22 or 23, wherein the detection marking information further comprises a third field, and a value of the third field indicates a risk type of a risk when the risk exists in the second service packet.

25. The packet detection method according to claim 24, wherein the risk type comprises one or more of the following: a file-type risk, a protocol-type risk, and a world wide web WEB-type risk.

26. The packet detection method according to any one of claims 22 to 25, wherein in the detection marking information, the first field occupies 1 bit, the second field occupies 1 bit, and the third field occupies 3 bits.

27. The packet detection method according to any one of claims 22 to 26, wherein the second service packet comprises an in-situ flow information telemetry IFIT packet header, and the detection marking information is located in the IFIT packet header.

28. The packet detection method according to claim 27, wherein the second service packet is an SRv6 protocol packet, and the IFIT packet header is located in a segment routing header SRH of the second service packet; or
the second service packet is an MPLS protocol packet, and the IFIT packet header is located in an MPLS packet header of the second service packet.

29. The packet detection method according to any one of claims 22 to 28, wherein the flow security status information comprises flow identification information and the detection marking information of the second service packet.

30. The packet detection method according to any one of claims 22 to 29, wherein the method further comprises:
in response to the second network device being an intermediate node on the service flow forwarding path, sending, by the second network device, the second service packet to a next-hop device on the service flow forwarding path.

31. A packet detection method, wherein the method comprises:
receiving, by a network management analyzer, flow security status information from a network device, wherein the flow security status information comprises flow identification information and detection marking information of a service packet, the detection marking information comprises a first field, and a value of the first field indicates whether a risk exists in the service packet; and
when the value of the first field indicates that a risk exists in the service packet, outputting alarm information, wherein the alarm information comprises an identifier of a service flow forwarding path on which a risk exists or identifiers of some nodes on the service flow forwarding path on which a risk exists, and the identifier of the service flow forwarding path on which a risk exists is determined based on the flow identification information.

32. An electronic device, comprising:
a memory, configured to store computer program instructions; and
a processor, configured to execute the computer program instructions, to support the electronic device in implementing the method according to any one of claims 1 to 12, implementing the method according to any one of claims 13 to 21, implementing the method according to any one of claims 22 to 30, or implementing the method according to claim 31.

33. A service flow transmission system, comprising one or more security devices, one or more network devices, and a network management analyzer, wherein the security device is configured to perform the method according to any one of claims 1 to 12, the network device is configured to perform the method according to any one of claims 13 to 21 or the method according to any one of claims 22 to 30, and the network management analyzer is configured to perform the method according to claim 31.

34. A computer-readable storage medium, wherein the computer-readable storage medium stores computer program instructions, and when the computer program instructions are executed by a processing circuit, the method according to any one of claims 1 to 12, the method according to any one of claims 13 to 21, the method according to any one of claims 22 to 30, or the method according to claim 31 is implemented.

35. A chip system, wherein the chip system comprises a processing circuit and a storage medium, the storage medium stores computer program instructions, and when the computer program instructions are executed by the processing circuit, the method according to any one of claims 1 to 12, the method according to any one of claims 13 to 21, the method according to any one of claims 22 to 30, or the method according to claim 31 is implemented.

36. A computer program product comprising instructions, wherein when the computer program product runs on a computer, the computer is enabled to implement the method according to any one of claims 1 to 12, implement the method according to any one of claims 13 to 21, implement the method according to any one of claims 22 to 30, or implement the method according to claim 31.
